(19) Europäisches Patentamt
European Patent Office
Office européen des brevets

(11) EP 0 672 305 B1

(12) **EUROPÄISCHE PATENTSCHRIFT**

(45) Veröffentlichungstag und Bekanntmachung des Hinweises auf die Patenterteilung:
**21.05.1997 Patentblatt 1997/21**

(21) Anmeldenummer: **94900759.5**

(22) Anmeldetag: **02.12.1993**

(51) Int Cl.[6]: **H01M 8/10**, H01M 4/88, C25B 11/20

(86) Internationale Anmeldenummer:
**PCT/DE93/01162**

(87) Internationale Veröffentlichungsnummer:
**WO 94/14203 (23.06.1994 Gazette 1994/14)**

(54) **ELEKTRODENMEMBRAN**

ELECTRODE MEMBRANE

MEMBRANE D'ELECTRODE

(84) Benannte Vertragsstaaten:
**CH DE FR GB IT LI NL SE**

(30) Priorität: **07.12.1992 DE 4241150**

(43) Veröffentlichungstag der Anmeldung:
**20.09.1995 Patentblatt 1995/38**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
- **LEDJEFF, Konstantin**
  **D-79189 Bad Krozingen (DE)**
- **NOLTE, Roland**
  **D-79211 Denzlingen (DE)**
- **BAUER, Michael**
  **D-79100 Freiburg (DE)**
- **MAHLENDORF, Falko**
  **D-79106 Freiburg (DE)**
- **PEINECKE, Volker**
  **D-79102 Freiburg (DE)**

(56) Entgegenhaltungen:
**US-A- 3 134 697**
**US-A- 4 272 353**
**US-A- 4 469 579**
**US-A- 4 828 941**

- **Patent Abstracts of Japan, Band 10, Nr 235, C-366, Zusammenfasung von JP, 61-67789 (JAPAN STORAGE BATTERY CO LTD), 7 April 1986 (07.04.86)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 672 305 B1

**Beschreibung**

Die Erfindung betrifft ein Verfahren zur Herstellung eines Elektrodenmembranverbundes aus einem einen Kernbereich bildenden Ionenaustauschermaterial und daran beidseitig kontaktierten Elektroden für Brennstoffzellen oder Elektrolyseure.

Elektrolyseure und Brennstoffzellen sind elektrochemische Systeme, die elektrische in chemische Energie (Elektrolyseprinzip) bzw. chemische in elektrische Energie (Brennstoffzellenprinzip) umwandeln können. So erzeugt ein Wasserelektrolyseur mit Hilfe elektrischer Energie Wasserstoff und Sauerstoff, umgekehrt wandelt eine Wasserstoff/Sauerstoff-Brennstoffzelle diese Gase in Wasser um unter Freisetzung von elektrischer Energie. Für ihre Funktion benötigen diese Systeme unter anderem zwei katalytisch aktive Elektroden zur elektrochemischen Umsetzung der chemischen Substanzen sowie einen ionenleitenden Elektrolyten zwischen den Elektroden zum Ladungstransport. Ein Beispiel für moderne Elektrolyseur- und Brennstoffzellenkonstruktionen sind Systeme, die keine Flüssigelektrolyte, sondern hochleitfähige polymere Ionenaustauschermembranen (polymere Festelektrolyte) verwenden.

Die zentrale Aufgabe ist die Herstellung der Membran-Elektroden-Einheit mit möglichst geringem Widerstand, um die auftretenden Überspannungen zu minimieren. Dies bedeutet zum ersten die Realisierung geringer elektrischer Verluste beim Übergang Elektrode/ionenleitende Membran. Hier ist eine intensive Anbindung der Polymermembran an den Katalysator erforderlich, um einen problemlosen An- bzw. Abtransport der durch die Membran wandernden Protonen zum bzw. vom Katalysator und den Elektronentransfer zwischen Elektrode und Reaktand zu gewährleisten. Im Falle einer schlechten Anbindung herrscht zumindest an vielen Stellen kein direkter Kontakt zwischen den Materialien, was zu einer Überspannung führt. Zudem sind poröse Membran- und Katalysatoroberflächen wünschenswert, um über die Rauhigkeit eine große Fläche für den Dreiphasenkontakt Membran/Katalysator/Flüssigkeit oder Gas zur Verfügung zu stellen. Ein geringer Widerstand der Elektroden-Membran-Elektroden-Einheit bedeutet zum zweiten die Realisierung eines kleinen Widerstandes der Ionenaustauschermembran selbst, wobei eine möglichst geringe Dicke und eine hohe Ionenaustauscherkapazität eine wesentliche Rolle spielen.

Im Stand der Technik werden für den polymeren Festelektrolyten unlösliche und unschmelzbare Ionenaustauschermembranen vorgeschlagen. Diese bereits fertigen Membranen werden nachträglich mittels naßchemischer oder Heißpreßverfahren mit den Elektroden kontaktiert.

Beim naßchemischen Verfahren wird die Membran beispielsweise in eine Beschichtungszelle eingebaut, so daß die Zelle durch die Membran in zwei voneinander getrennte Räume aufgeteilt ist. Die eine Seite enthält Hexachloroplatinsäure, die andere z. B. Hydrazin als Reduktonsmittel, welches durch die Membran diffundiert und im Oberflächenbereich der Membran Platin abscheidet. Ein solches Verfahren ist von H. Takenaka und E. Torikai beschrieben (JP 80-38934, Appln. 78/110,267 vom 7. Sept. 1978).

Alternativ kann die Katalysatoranbindung mittels Aufpressen erfolgen. Hierbei ist das katalytisch aktive Pulver das Ausgangsmaterial, das mit der Membran verpreßt wird. Eine allgemeine Beschreibung des Preßverfahrens ist in Appleby, Yeager, Energy (Oxford), 11 (1986), 137 enthalten.

Obgleich mit diesen Verfahren funktionsfähige Membran-Elektroden-Einheiten hergestellt werden können, weisen sie Nachteile auf. Beide Verfahren verwenden den polymeren Ionenleiter in fester, d. h. formstabiler Phase. Damit ist zwar eine gewisse Anbindung zwischen Katalysator und Polymer gegeben, aber eine gewünschte intensive, verklebungsähnliche Anbindung beider Materialien ist kaum zu erreichen. Eine zusätzliche Oberflächenporosität der eingesetzten dichten Membran kann nachträglich nur schwer erzeugt werden. Zudem sind beide Verfahren gerade für die Beschichtung sehr dünner Membranen, d. h. Membranen mit geringem Widerstand, kritisch. Im Falle des naßchemischen Verfahrens besteht die Gefahr, daß sich die Metallabscheidung vom Membranrandbereich bis in den Mittenbereich hin ausdehnt und so zu elektrischen Kurzschlüssen in der Membran führen kann. Im Falle des Heißpressens sind zur Erzielung akzeptabler elektrochemischer Kennwerte erhebliche Drücke und Temperaturen erforderlich, so daß hier gerade bei dünnen Membranen die Gefahr der Membranbeschädigung besteht, z. B. bei einem Durchdrücken der Katalysatorkörner durch die Membran.

Aufgabe der Erfindung ist es daher ein Verfahren zur Herstellung von Elektrodenmembranverbunden für Brennstoffzellen oder Elektrolyseure vorzuschlagen, das eine integrale Verbindung der Elektrode mit dem ionenleitenden Material gewährleistet. Damit sollen geringe elektrische Verluste beim Übergang Elektrode/ionenleitende Membrane erreicht werden. Gleichzeitig soll die Möglichkeit gegeben sein, daß sehr dünne ionenleitende Schichten hergestellt werden können, die im Oberflächenbereich mit einer zusätzlichen Porosität versehen werden können.

Die Erfindung wird durch die kennzeichnenden Merkmale des Anspruches 1 gelöst. Die Unteransprüche 2 bis 13 geben vorteilhafte Weiterbildungen an.

Erfindungsgemäß wird vorgeschlagen einen Elektrodenmembranverbund Herzustellen beiden das ionenleitende Material des Kernbereichs aus in Lösungsmittel löslichen Polymeren gebildet wird, wobei aufgrund der geforderten Ionenleitfähigkeit zumindest ein Teil des Polymers ein in Ionen dissoziierbaren Rest aufweisen muß. Entscheidend dabei ist die Löslichkeit der Kernmembran. Durch die Festlegung auf in Lösungsmitteln löslich Polymeren ist der erfindungsgemäße Aufbau des Elektrodenmembranverbundes möglich. Die Elektroden sind dabei beidseitig des Kernbereichs in die Oberflächen des Kernbereiches des ionenleitenden Materiales integriert. Erfindungswesentlich ist weiter, daß die Außenfläche der Elektrode frei von ionenleitendem Material ist und somit eine reine elektronische Leitfähigkeit aufweist, wohingegen der Zwischenbereich, d. h. zwischen dem reinen Kernbereich und dem rein elektronisch leitenden Außenbereich ionisch und elektronisch leitend ist. Das Elektrodenmaterial weist dabei eine intensive, verklebungsähnliche Anbindung zwischen Katalysator und Membran auf. Dies bedeutet zum ersten die Realisierung geringer elektrischer Verluste beim Übergang Elektrode/ionenleitende Membran. Gleichzeitig erlauben die erfindungsgemäß vorgeschlagenen Elektrodenmembranverbunde die Herstellung von sehr dünnen (im Bereich von 10 bis 500 µm) Membranen, was zum zweiten die Realisierung eines kleinen Widerstandes der Ionenaustauschermembran selbst bedeutet.

Nach einer bevorzugten Ausgestaltung der Erfindung ist es vorgesehen, daß der Elektrodenmembranverbund im Bereich des ionisch und elektronisch leitenden Zwischenbereichs sowie des rein elektronisch leitenden Bereichs porös ist. Poröse Membran- und Katalysatoroberflächen sind vorteilhaft, da somit über die Rauhigkeit eine große Fläche für den drei-Phasen-Kontakt Membran/Katalysator/Flüssigkeit oder Gas zur Verfügung steht.

Als Basismaterial zur Herstellung der Elektrodenmembranverbundes kommen Homopolymere, Copolymere oder Gemische hiervon zum Einsatz, die mit geeigneten Lösemitteln als viskose Lösungen erhalten werden können. Hierzu zählen auch geeignete flüssige Monomere als Lösungsmittel (z. B. Styrol). Die folgenden Monomereinheiten können beispielhaft in den Homo-/Copolymeren oder Mischungen davon enthalten sein, wobei zumindest eine Einheit einen in Ionen dissoziierbaren Rest enthalten muß, um eine ausreichende ionische Leitfähigkeit zu gewährleisten. Unter Monomereinheiten werden erfindungsgemäß die Einheiten verstanden, die zum Aufbau des Polymers nötig sind. Insbesondere kommen Strukturen zum Einsatz, die ausreichende chemische Stabilität im Brennstoffzellen-/Eletrolyseeinsatz aufweisen, wie z. B.
subst. Poly(diene):

$$[- CH_2 - C(R_1) = CH - CH_2 -]$$

$$[- CH_2 - C(R_1)(CH{=}CH_2) -]$$

$$[- CH_2 - CH(C(R_1){=}CH_2) -]$$

$R_1$ = -H, $-CH_3$

subst. Poly(alkene):

$$[- CH_2 - C(R_2)(R_3) -]$$

$R_2$ = -H, $-CH_3$
$R_3$ = -COOH, $-COO(R_4)$, $-CONH_2$, -CN, -OH, $-O(R_4)$, $-OC(O)(R_4)$, $-C(O)(R_4)$, -Cl, $-C_6H_4(R_5)$

$R_4$ = $-CH_3$, $-C_2H_5$, $-C_3H_7$, $-C_4H_9$
$R_5$ = -COOH, $-SO_3H$, $-PO_3H_2$

subst. Poly(phenylenoxide) und Poly(phenylensulfide):

$$[- X_1 - R_6 - ]$$

$X_1$ = -O-, -S-
$R_6$ = $-C_6H_4-$, $-C_6H_3(R_5)-$, $-C_6H_2(CH_3)_2-$, $-C_6H(CH_3)_2(R_5)-$

$R_5$ = -COOH, $-SO_3H$, $-PO_3H_2$

subst. Poly(ester):

$$[- O - C(O) - R_{14} -], [- O - C(O) - R_{14} - C(O) - O - R_{17}]$$

$R_{14}, R_{17}$ = $-C_6H_4-$, $-C_6H_3(R_5)-$, $-C_6H_2(CH_3)_2-$, $-C_6H(CH_3)_2(R_5)-$, $-CH_2-$, $-C_2H_4-$, $-C_3H_6-$, $-C_4H_8-$

$R_5$ = $-COOH$, $-SO_3H$, $-PO_3H_2$

subst. Poly(carbonate):

$$[-O-C(O)-O-R_{14}-C(CH_3)_2-R_{17}-]$$

$R_{14}, R_{17}$ = $-C_6H_4-$, $-C_6H_3(R_5)-$, $-C_6H_2(CH_3)_2-$, $-C_6H(CH_3)_2(R_5)-$, $-CH_2-$, $-C_2H_4-$, $-C_3H_6-$, $-C_4H_8-$

$R_5$ = $-COOH$, $-SO_3H$, $-PO_3H_2$

subst. Poly(urethane):

$$[- NH - C(O) - O - R_{14} - ]$$

$R_{14}$ = $-C_6H_4-$, $-C_6H_3(R_5)-$, $-C_6H_2(CH_3)_2-$, $-C_6H(CH_3)_2(R_5)-$, $-CH_2-$, $-C_2H_4-$, $-C_3H_6-$, $-C_4H_8-$

$R_5$ = $-COOH$, $-SO_3H$, $-PO_3H_2$

subst. Poly(amide):

$$[-NH-C(O)-R_{14}-],[-NH-C(O)-R_{14}-C(O)-NH-R_{17}-]$$

$R_{14}, R_{17}$ = $-C_6H_4-$, $-C_6H_3(R_5)-$, $-C_6H_2(CH_3)_2-$, $-C_6H(CH_3)_2(R_5)-$, $-CH_2-$, $-C_2H_4-$, $-C_3H_6-$, $-C_4H_8-$

$R_5$ = $-COOH$, $-SO_3H$, $-PO_3H_2$

subst. Poly(harnstoffe):

$$[- NH - C(O) - NH - R_{14} -]$$

$R_{14}$ = $-C_6H_4-$, $-C_6H_3(R_5)-$, $-C_6H_2(CH_3)_2-$, $-C_6H(CH_3)_2(R_5)-$, $-CH_2-$, $-C_2H_4-$, $-C_3H_6-$, $-C_4H_8-$

$R_5$ = $-COOH$, $-SO_3H$, $-PO_3H_2$

subst. Poly(sulfone):

$$[-S(O)_2-R_7-O-R_8-C(CH_3)_2-R_9-O-R_{10}-]$$

$R_7$, $R_8$, $R_9$, $R_{10}$ = $-C_6H_4-$, $-C_6H_3(R_5)-$, $-C_{10}H_6-$, $-C_{10}H_5(R_5)-$

$R_5$ = $-COOH$, $-SO_3H$, $-PO_3H_2$

subst. Poly(ethersulfone):

$$[[- S(O)_2 - R_7 - ]_n [- O - R_8 - ]_m]$$

n, m = 1 oder 2

$R_7, R_8$ = $-C_6H_4-, -C_6H_3(R_5)-, -C_{10}H_6-, -C_{10}H_5(R_5)-$

$R_5$ = $-COOH, -SO_3H, -PO_3H_2$

subst. Poly(sulfonate):

$$[-O-S(O)-O-R_6-]$$

$R_6$ = $-C_6H_4-, -C_6H_3(R_5)-, -C_{10}H_6-, -C_{10}H_5(R_5)-$

$R_5$ = $-COOH, -SO_3H, -PO_3H_2$

subst. Poly(etherketone)

$$[[ - C(O) - R_7 - ]_n [ - O - R_8 - ]_m ]$$

n, m = 1 oder 2
$R_7, R_8$ = $-C_6H_4-, -C_6H_3(R_5)-, -C_{10}H_6-, -C_{10}H_5(R_5)-$

subst. Poly(perfluoraliphaten)

$$[- CF_2 - CF(R_{11}) - ]$$

$R_{11}$ = $-F, -C_6H_5, -C_6H_4(R_5), -OC_6H_4(R_5)$

$R_5$ = $-COOH, -SO_3H, -PO_3H_2$

subst. Poly(benzoxazole):

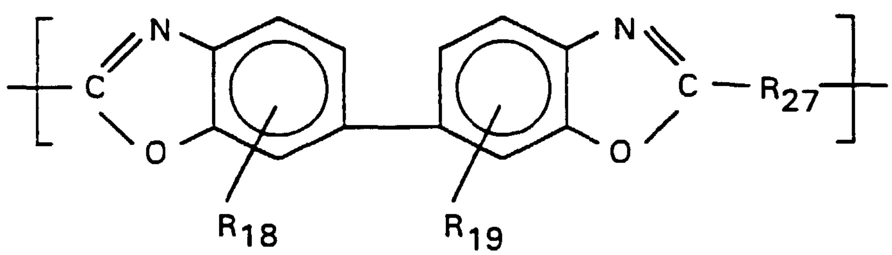

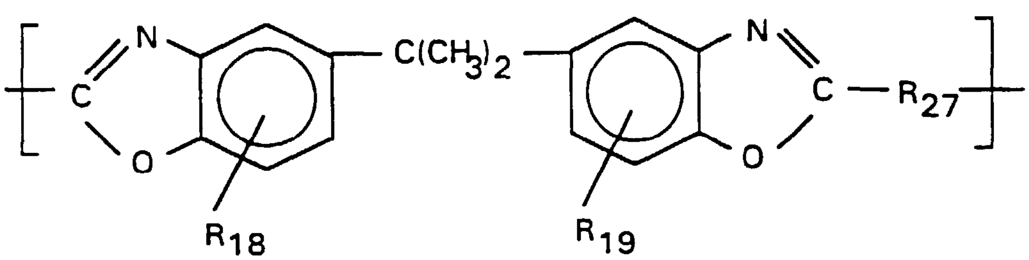

$R_{27}$ = $-C_6H_3(R_{20})-, -(CH_2)_p-$
$R_{18}, R_{19}, R_{20}$ = $-H, -COOH, -SO_3H, -PO_3H_2$
p = 2-8

subst. Poly(benzimidazole):

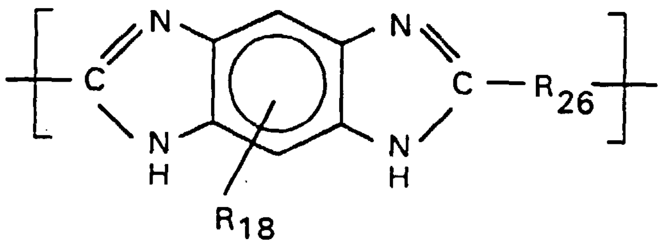

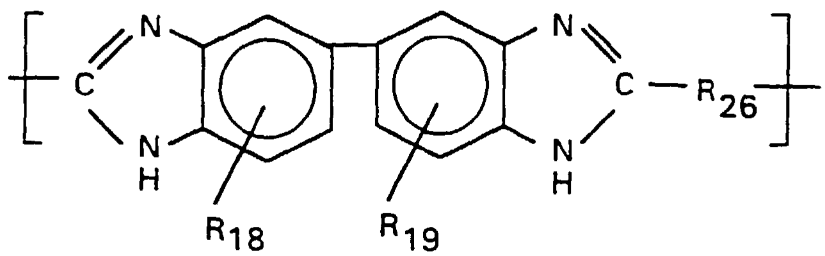

$R_{26}$ = $-C_6H_3(R_{20})-$, $-(CH_2)_p-$
$R_{18}$, $R_{19}$, $R_{20}$ = -H, -COOH, $-SO_3H$, $-PO_3H_2$
p = 2-8

subst. Poly(dithiazole):

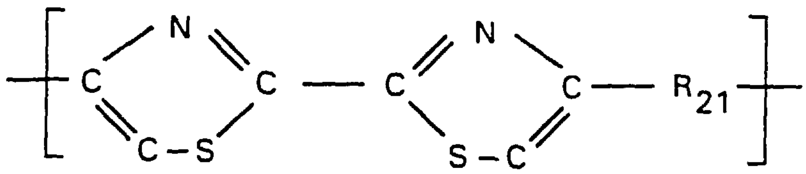

$R_{21}$ = $-C_6H_3(R_{20})-$, $-C_6H_3(R_{20})-(CH_2)_p-C_6H_3(R_{20})-$
$R_{20}$ = -H, -COOH, $-SO_3H$, $-PO_3H_2$
p = 2-8

subst. Poly(benzothiazole):

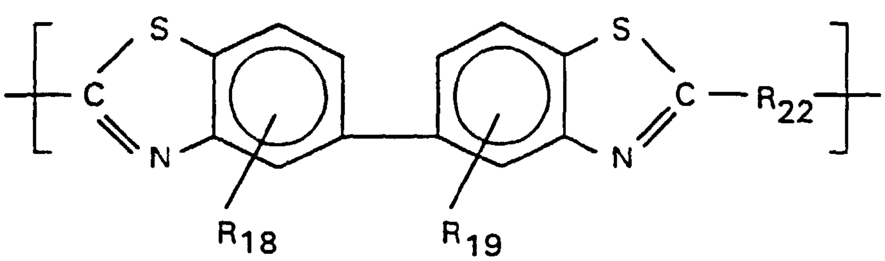

$R_{22}$ = $-C_6H_3(R_{20})-$, $-C_6H_3(R_{20})-O-C_6H_3(R_{20})-$, $-C_6H_3(R_{20})-C(O)-C_6H_3(R_{20})-$
$R_{18}$, $R_{19}$, $R_{20}$ = -H, -COOH, $-SO_3H$, $-PO_3H_2$

subst. Poly(phenylchinoxaline)

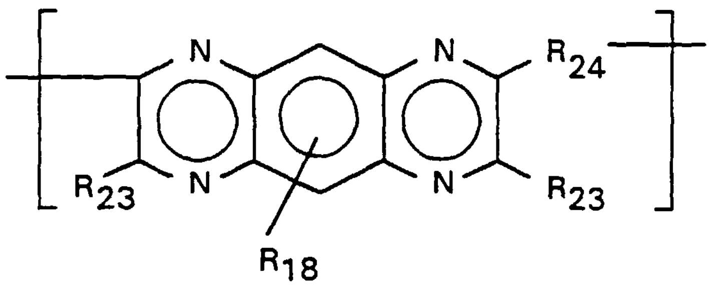

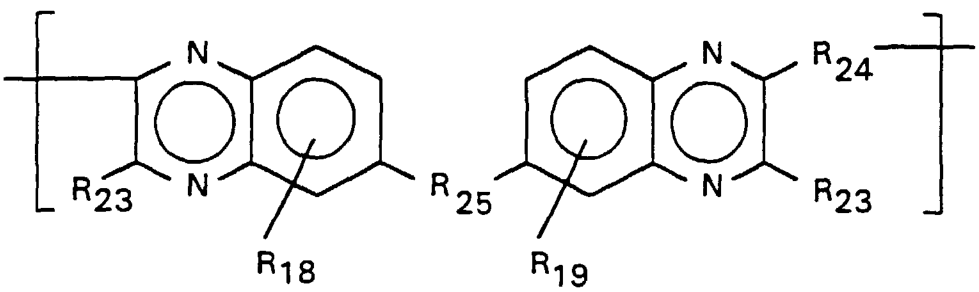

$R_{23}$ = -H, $-C_6H_4(R_{20})$
$R_{24}$ = $-C_6H_3(R_{20})-$, $-C_6H_3(R_{20})-R_{25}-C_6H_3(R_{20})-$,
$R_{25}$ -O-, -S-, $-S(O)_2$, -C(O)-
$R_{18}$, $R_{19}$, $R_{20}$ = -H, -COOH, $-SO_3H$, $-PO_3H_2$

subst. Poly(phosphazene)

$$[ - P(R_{12})(R_{13}) = N - ]$$

$R_{12}$, $R_{13}$ = $-OCH_3$, $-OC_2H_5$, $-OC_3H_7$, $-OC_4H_9$, $-OC_6H_5$, $-OC_6H_4(R_5)$

$R_5$ = -COOH, $-SO_3H$, $-PO_3H_2$

subst. Poly(siloxane)

$$[ - O - Si(OR_{15})(OR_{16}) - ]$$

$$[ - O - Si(R_{15})(R_{16}) - ]$$

$R_{15}$, $R_{16}$ = $-CH_3$, $-C_2H_5$, $-C_3H_7$, $-C_4H_9$, $-C_6H_5$, $-C_6H_4(R_5)$

$R_5$ = -COOH, $-SO_3H$, $-PO_3H_2$

Die Monomereinheiten werden dabei in einem Polymerisationsgrad eingesetzt, der eine Lösung bzw. in Viskoselösung der Polymeren noch ermöglicht. Des weiteren können Strukturelemente enthalten sein, die eine nachträgliche Vernetzung des Polymermaterials in der Elektrodenmembran ermöglichen. Hiermit können die Quellungseigenschaften hochleitfähiger Ionenaustauschermembranen günstig beeinflußt werden. Solche Ionenaustauschermembranen besitzen im allgemeinen einen hohen Quellungsgrad, der die mechanischen Eigenschaften der Membran erheblich verschlechtert. Eine Vernetzung der Membran verringert den maximalen Quellungsgrad und verbessert damit das Eigenschaftsprofil der Membran. Die Vernetzung kann dabei thermisch, chemisch oder photochemisch initiiert werden.

Beispielsweise kann im Rest $R_5$ ein Teil der Sulfonsäuregruppe in aktivierter Form (Sulfoazolid) mit einem zugegebenen Diamin zu einem vernetzenden Sulfonamid umgesetzt werden. Die Aktivierung der Sulfonsäuregruppen zum Sulfoazolid erfolgt durch Umsetzung mit N,N'-Carbonyldiimidazol.

Als Elektrodenmaterial werden gängige Elektrodenmaterial eingesetzt. Bevorzugt werden als Elektrodenmaterial Substanzen oder trägergebundene Substanzen eingesetzt, welche elektrochemische Katalysatoren für die Redoxreaktionen $H_2/H^+$ und $O_2/O^{2-}$ darstellen. Hierbei finden insbesondere Metalle, Legierungen, Oxide, Mischoxide oder Gemische daraus Verwendung. diesen Substanzen liegen zumeist Elemente der VIII Nebengruppe des Periodensystems zugrunde, wobei zusätzlich Substanzen enthalten sein können, denen Elemente aus anderen Gruppen des Periodensystems zugrundeliegen. Es kann sich um Materialien ohne Träger handeln, oder um Materialien, die auf einem Träger wie Kohlenstoff, Titan, Tantal oder ähnliches aufgebracht sind.

Die erfindungsgemäßhergestellten Elektrodenmembranverbunde weisen nun eine Leitfähigkeitsübergang auf, der sich vom Kernbereich A zur Außenseite hin zu einer reinen elektronischen Leitfähigkeit wandelt. Der Übergang kann schrittweise, d. h. in Schichten oder kontinuierlich ausgebildet sein.

Die Erfindung zeigt zwei grundsätzliche Wege zur Herstellung eines derartigen Elektrodenmembranverbundes auf.

Einerseits ist es möglich zuerst den Kernbereich A und in einem gesonderten Verfahrensschritt das Elektrodenmaterial herzustellen und dann entweder die Elektrodenoberfläche oder die Membranseite oder beide Komponenten durch ein Lösemittel oder durch eine Polymerlösung anzulösen und dann die Komponenten, d. h. den Kernbereich und die zwei Elektroden durch Zusammenpressen zusammenzufügen (Anspruch 1)

Die zweite erfindungsgemäß vorgeschlagene Variante (Anspruch 2) schlägt nun vor, daß der Kernbereich dadurch gebildet wird, daß das Elektrodenmaterial jeweils einseitig mit dem ionenleitenden Material beschichtet wird und dann diese beiden Halb-Komponenten nach einem Benetzen bzw. Anlösen der ionenleitenden Oberfläche durch Zusammenpressen dieser beiden Komponenten gebildet wird. Der Kernbereich entsteht also in diesem Fall durch das Zusammenfügen der beiden beschichteten Halbmembranelektrodeneinheiten.

Die Herstellung des Elektrodenmaterials für die erste Variante, d. h. für das Zusammenfügen von drei Komponenten, ist im Prinzip aus dem Stand der Technik bekannt. Nach M. S. Wilson, und S. Gottesfeld, Journal of Applied Electrochemistry 22 (1992), Seite 1 bis 7 ist es bekannt eine dünne Schicht aus Katalysatorpartikeln (1-20 µm) auf eine Trägerstruktur aufzubringen und anschließend dort abzulösen. Der auf diese Weise hergestellten "einfachen" Elektrode kann erfindungsgemäß bei der Herstellung als Zusatz bzw. Füllstoff Treibmittel und/oder Hydrophobierungsmittel zugegeben werden. Treibmittel werden eingesetzt, um bei nachfolgenden Präparationsschritten aufzubringende Substanzen daran zu hindern, das gesamte Porensystem auszufüllen und zu desaktivieren. Hydrophobierungsmittel sind notwendig, um für den Brennstoffzellenbetrieb wasserabweisende, nicht flutbare Elektroden zu erhalten.

Neben diesen sogenannten "einfachen" Elektroden können erfindungsgemäß auch "aktivierte" Elektroden zur Herstellung der Elektrodenmembran verwendet werden. Unter aktivierten Elektroden wird erfindungsgemäß eine wie vorstehend beschrieben hergestellte einfache Elektrode verstanden, wobei diese zusätzlich mit einer Lösung bzw. Emulsion definierter Konzentration eines ionenleitenden Polymers versetzt wird. Das ionenleitende Polymer kann hier noch gelöst Treibmittel zur Porenbildung enthalten. Das ionenleitende Polymer kann durch Aufsprühen unter definierten Sprühbedingungen oder durch Aufstreichen (Pinsel, Bürste, etc.) oder durch Tränken aufgebracht werden. Hiermit wird ein großer Bereich der Elektrode, also der Kornschichten des Katalysators, mit dem ionenleitenden Material kontaktiert und damit aktiviert. Bei diesem Aktivierungsvorgang muß darauf geachtet werden, daß einerseits ein ausreichend großer Anteil der Elektroden kontaktiert wird, andererseits nicht die gesamte Schicht durch das ionenleitende Material geflutet wird und damit der Gaszutritt erschwert bzw. verhindert wird. Abschließend wird das Lösemittel verdunstet, wobei gleichzeitig oder nachträglich eine Wärmebehandlung, Bestrahlung mit Licht oder eine Säurebehandlung zur Gasfreisetzung zugegebener Treibmittel erfolgen kann. Werden Monomere als Lösungsmittel verwendet, kann alternativ zur Verdampfung des Lösungsmittels das Monomer polymerisiert werden, wobei die Iniziierung der Polymerisation durch Licht, Wärme oder den Zerfall eines Initiators erfolgen kann. Als Resultat erhält man eine Elektrode, die im Inneren teilweise mit Polymer benetzt ist und oberflächlich einseitig mit einer sehr dünnen Schicht (0,1-5 µm) des Polymers belegt ist.

Zur Herstellung der beschichteten Elektrode für die zweite Variante wird ebenfalls eine wie vorstehend beschriebene "einfache" oder "aktivierte" Elektrode hergestellt. Auf die schon mit Polymer dünn belegte Oberfläche der aktivierten Elektrode wird dann weiteres Polymer durch Aufsprühen, Aufstreichen oder Aufgießen aufgebracht. Nach Trocknung dieser Zusatzschicht bzw. Polymerisation der Monomere ist durch diesen Vorgang somit ein Teil (max. 50 %) der in einer elektrochemischen Zelle als Elektrolyt notwendigen Membran direkt auf die Elektrode aufgebracht worden (diese Elektrode wird erfindungsgemäß als Halb-Membran/Elektroden-Einheit bezeichnet).

Die gewünschte Struktur des Elektrodenmembranverbundes im Übergangsbereich zwischen reiner Ionenleitung und reiner elektronischer Leitung (guter Dreiphasenkontakt Gas, Polymer, Elektrode) kann durch geeignete Einstellung der Sprühparameter und/oder durch die Verwendung von Treibmitteln erreicht werden. Sinn der Verwendung von Treibmitteln ist die kontrollierte Gasfreisetzung, die den Aufbau einer nicht dichten, porös kanalartigen Struktur im Inneren der Elektrode ermöglicht. Die Treibmittel können entweder bei der Herstellung der "aktivierten" Elektrode in der Polymerlösung gelöst enthalten sein oder aber bei der Herstellung der "einfachen" Elektrode integriert werden.

Ist das Treibmittel als gelöste Komponente in der Polymerlösung enthalten, sind physikalische Treibmittel (Gasbildung aufgrund der Verdampfung) oder chemische Treibmittel (Gasbildung aufgrund einer thermisch oder photochemisch initiierten chemischen Reaktion) möglich. Als physikalische Treibmittel kommen mit der Polymerlösung mischbare Lösemittel in Frage, als thermisch initiierte chemische Treibmittel z. B. Diphenylsulfon-3,3-disulfohydrazid (Zersetzungstemperatur 155 °C) oder Oxy-bis(benzolsulfonyisemicarbazid) (Zersetzungstemperatur 150 °C), als photochemisch initiierte Treibmittel Azoinitiatoren wie Azo-bis(isobutyronitril) (Zersetzung bei Einschaltung einer Wellenlänge von 350 nm). Die Gasfreisetzung erfolgt bei der Herstellung der aktivierten Elektrode nach Aufbringung der Polymerlösung.

Für die "einfache" Elektrode kommen feste Treibmittel in Frage. Das feste Treibmittel kann entweder als Mischung mit dem Katalysator auf die Trägerstruktur gegeben werden oder nachträglich auf den bereits aufgebrachten Katalysator. Das feste Treibmittel darf in der Polymerlösung nicht löslich sein. In Frage kommen Stickstoff-freisetzende Feststoffe wie Azoinitiatoren, die thermisch initiiert werden, oder Kohlendioxid entwickelnde Verbindungen wie Carbonate ($Na_2CO_3$, $K_2CO_3$), die durch Säurebehandlung initiiert werden. Die Initiierung erfolgt entweder bei der Herstellung der "aktivierten" Elektroden nach dem Aufbringen der Polymerlösung oder, falls eine "einfache" Elektrode verwendet wird, beim Herstellen des Elektrodenmembranverbundes in dem Schritt, wo die Kernmembran mit den einfachen Elektroden verbunden wird.

Als dritte Möglichkeit kann die "einfache" Elektrode mit einem mit der Polymerlösung nicht oder nur schlecht mischbaren physikalischen, flüssigen Trennmittel wie z. B. Benzol oder Heptan getränkt werden. Da die Oberfläche der Elektrode schnell abtrocknet, ist bei der nachfolgenden Weiterverarbeitung trotzdem ein Eindringen der Polymerlösung gewährleistet. Die Initiierung des Treibmittels erfolgt thermisch.

Die Herstellung des Elektrodenmembranverbundes kann auf verschiedene Arten aus den bereits oben beschriebenen "einfachen" Elektroden, den "aktivierten" Elektroden oder den "Halb-Membran/Elektroden-Einheiten" erfolgen.

Nach der ersten Variante werden drei Komponenten verarbeitet. Als Ausgangsmaterialien dienen zwei einfache Elektroden und eine Kernmembran. Bei der Kernmembran handelt es sich um eine aus mit den erfindungsgemäß beschriebenen Polymeren dargestellte Membran, die in geeigneten Lösemitteln löslich ist. Zur Herstellung des Elektrodenmembranverbundes werden die Seiten der Kernmembran oder die Elektroden oder beide mit einem Lösemittel oder einer die Kernmembran anlösenden Polymerlösung benetzt, z. B. durch Besprühen, Bepinseln oder Rakeln. Die so vorbehandelten Komponenten werden entweder sofort oder nach einer kurzen Antrocknungszeit weiterverwendet. Die Integration der katalytisch aktiven Strukturen erfolgt durch Zusammenpressen der Kernmembran mit den einfachen Elektroden bei einem Preßdruck von 0 bis 10 bar und einer Temperatur zwischen 20 und 150 °C, so daß die Elektrodenstruktur direkt in die oberste angelöste Schicht der Kernmembran eingebracht wird. Man läßt anschließend das Lösemittel verdunsten bzw. polymerisiert das Monomer, so daß eine feste integrale Struktur entsteht und löst das Trägermaterial der ursprünglichen, "einfachen" Elektrode in geeigneten Lösungen ab.

Eine Ausgestaltung der Erfindung sieht nun vor, daß anstatt der "einfachen" Elektrode sogenannte "aktivierte" Elektroden verwendet werden.

Hier werden ebenfalls drei Komponenten verarbeitet. Als Ausgangsmaterial dienen nun zwei "aktivierte" Elektroden und eine Kernmembran. Die Herstellung des Elektrodenmembranverbundes erfolgt analog den Verfahrensschritten, die im vorstehenden Verfahren beschrieben wurden.

Nach der zweiten Variante werden nur zwei Komponenten verarbeitet. Als Ausgangsmaterialien dienen hier zwei Halb-Membran/Elektroden-Einheiten, so daß in diesem Fall auf die Verwendung einer Kernmembran verzichtet werden kann. Die Herstellung des Elektrodenmembranverbundes erfolgt durch Anlösen einer oder beider HalbMembran/Elektroden-Einheiten mit einem Lösemittel oder einer Polymerlösung und dem anschließenden Verbinden der beiden Stükke.

Die erfindungsgemäßen hergestellten Elektrodenmenbranverbunde werden bevorzugt für Elektrolyseure oder Brennstoffzellen eingesetzt. Aufgrund der erfindungsgemäßen Ausgestaltung des Elektrodenmembranverbundes und ihrem geringen inneren Übergangswiderstand sind diese Elektrodenmembranverbunde ausgezeichnet hierfür geeignet.

Die Erfindung wird nachstehend anhand eines Ausführungsbeispiels und dreier Figuren näher erläutert.

Figur 1 zeigt den schematischen Aufbau des Elektrodenmembranverbundes in Schichtform;
Figur 2 zeigt das Funktionsprinzip einer Wasserstoff/Sauerstoff-Brennstoffzelle mit polymeren Ionenleitern als Festelektrolyt;
Figur 3 zeigt die Strom-Spannungs-Charakteristik einer gemäß Beispiel 1 hergestellten Elektrodenmembranverbundes die bei 26 °C in der Wasserelektrolyse als polymerer Festelektrolyt eingesetzt wurde.

Beispiel 1

30 g sulfoniertes Polyethersulfon mit einem Sulfonierungsgrad von 90 % werden in 100 ml Dimethylformamid

gelöst. Man verteilt eine entsprechende Menge dieser Lösung homogen auf einer Glasplatte und läßt das Lösungsmittel über Nacht verdunsten, so daß eine etwa 40 µm dicke Kernmembran entsteht. Diese wird in 1 m Salzsäure von der Glasplatte abgelöst und anschließend getrocknet. zwei Platin-beschichtete, "einfache" Eletroden werden mit oben genannter Polymerlösung aus 25 cm Entfernung 40 s lang besprüht, so daß die Oberfläche der Elektrode homogen mit einem viskosen Polymerfilm belegt ist. Die Elektroden werden 4 h im Wasserstrahlvakuum bei 120 °C getrocknet. Anschließend erfolgt ein kurzes Besprühen (einige Sekunden) mit Dimethylformamid, gefolgt von dem nun möglichen Verkleben mit der Kernmembran und abschließendem Trocknen des Elektrodenmembranverbundes (120 °C, 4 h, Wasserstrahlvakuum). Der vom Trägermaterial der einfachen Elektrode befreite Elektrodenmembraverbund kann dann in eine Wasserelektrolyse-Testzelle eingebaut werden.

Der schematische Aufbau der Gesamtmembran ist in Figur 1 wiedergegeben. Die in Figur 1 dargestellten Kreise symbolisieren Katalysatorpartikel, z. B. Platin. Die gerasterte Fläche stellt dabei das ionenleitende Material dar. Ein erfindungsgemäßer Elektrodenmembranverbund kann demnach schichtweise in der Art aufgebaut sein, daß auf eine zentrale Schicht des Types A (Kernbereich aus ionenleitendem Material) auf jeder Seite eine Schicht B folgt. Auf diese Schicht B folgt dann jeweils eine Schicht vom Typ C, so daß sich der Elektrodenmembranverbund in insgesamt fünf Bereiche unterteilen läßt. Erfindungsgemäß ist jedoch genauso eine kontinuierliche Änderung der Schichteigenschaften beim Übergang von einer Schicht zur nächsten Schicht möglich. Das Eigenschaftsprofil der Schichten A, B und C ist in Tabelle 1 wiedergegeben.

Tabelle 1

| | Schicht A | Schicht B | Schicht C |
|---|---|---|---|
| Dicke des Bereiches | 1 - 500 um | 1 - 500 um | 1 - 500 um |
| Katalysatoreigenschaften | nein | ja | nicht nötig |
| Leitfähigkeit | ionisch | ionisch und elektronisch | elektronisch |
| Membranstruktur | dicht | porös | porös |
| Gaspermeabilität | niedrig | hoch | hoch |

Schicht A entspricht einer dichten Ionenaustauschermembran. Sie besitzt rein ionische und keine elektrische Leitfähigkeit und dient dem Ionentransport zwischen den Elektroden. Sie sollte eine niedrige Gaspermeabilität aufweisen, um bei auf beiden Seiten vorhandenen unterschiedlichen Gasen, z. B. $H_2$ und $O_2$, einen direkten Kontakt zu verhindern. Schicht C entspricht einem porösen elektrischen Leiter. Durch die poröse Struktur muß der Stofftransport von außen zum Reaktionsort bzw. umgekehrt stattfinden, gleichzeitig dient die elektrisch leitfähige Oberfläche als Kontakt zur Spannungszufuhr bzw. zum Spannungsabgriff. Die elektrochemische Reaktion findet in Schicht B statt. In ihr erfolgt die Anbindung des Ionenleiters an den Katalysator, weshalb sie einerseits ionisch leitfähig sein muß für den Ionentransport zur Schicht A, andererseits auch elektrisch leitfähig sein muß für den Elektronentransport zur Schicht C. Eine gewisse Porosität sorgt für die nötige Rauhigkeit und die Möglichkeit eines schnellen Stofftransportes der umgesetzten bwz. umzusetzenden Spezies.

Eine intensive, verklebungsartige Anbindung des Ionenleiters an den Katalysator erfolgt bei der Herstellung des Elektrodenmembranverbundes durch die Verwendung gelöster ionenleitfähiger Poymere anstelle der bisher verwendeten festen Stoffe. In dieser Lösung sind die Makromoleküle beweglich, was sowohl die Beweglichkeit zweier Polymerketten gegeneinander als auch die Segmentbeweglichkeit innerhalb einer Polymerkette betrifft. Eine Benetzung der Katalysatoroberfläche mit Polymerlösung und anschließender Verfestigung der Lösung (Verdampfen des Lösungsmittels oder Polymerisation flüssiger Monomere) erlaubt dem Polymer durch die hohe Ketten- und Segmentbeweglichkeit, einen hohen Anteil von Monomereinheiten in der Kette mit dem Katalysator in Wechselwirkung treten zu lassen, was eine verklebungsartige, gute Anbindung der Materialien bedeutet. Ungelöste und nicht geschmolzene Polymere, wie sie in kommerziellen Beschichtungsverfahren verwendet werden, besitzen keine derartig bewegliche Ketten, allenfalls eingeschränkte Segmentbeweglichkeiten, so daß der Wechselwirkung Polymer-Katalysator mangels Möglichkeit der Ketten zur optimalen Wechselwirkung mit dem Substrat Grenzen gesetzt sind. Verfahrenstechnische Schritte bei der Herstellung des Elektrodenmembranverbundes die für die Membran kritische Parameter erfordern (hohe Temperaturen, hoher Druck, schwierig zu kontrollierende Metallabscheidung), sind nicht nötig. Die Herstellung von sehr dünnen Membran-Elektroden-Einheiten ist aus dieser Sicht nicht problematisch.

Die Verwendung gelöster Polymere zur Herstellung der ionenleitfähigen Strukturen erlaubt es, oben erwähnte zusätzliche Porositäten in die Membran zu integrieren. Durch die Zugabe gasentwickelnder Treibmittel können während der Verfestigung der Polymerlösung (Abdampfen des Lösungsmittels bzw. Polymerisation der Monomere) durch die einsetzende Gasentwicklung poröse Strukturen erhalten werden. Entsprechende Möglichkeiten bestehen bei der Verwendung unlöslicher und unschmelzbarer Polymere nicht.

Durch das Konzept des Elektrodenmembranverbundes erreicht man einerseits einen sehr innigen Kontakt zwischen aktiver Elektrode und Membranelektrolytoberfläche, andererseits lassen sich sehr dünne, damit ionisch hochleitfähige Membran/Elektroden-Einheiten herstellen.

Figur 2 zeigt nun das Funktionsprinzip einer Wasserstoff/Sauerstoff-Brennstoffzelle mit polymeren Ionenleitern als Festelektrolyt. Das Ionenaustauschermembran 1 ist dabei als zentrale Einheit in der Brennstoffzelle eingebaut. Der Katalysator 2 ist dabei direkt mit einem porösen Verteiler 3 und einem Stromkollektor 4 verbunden. Der Betrieb der Brennstoffzelle läuft nach folgender Reaktionsgleichung ab:

Oxidation:

$$H_2 + 2H_2O ==> 2H_3O^+ + 2\ e^-$$

Reduktion:

$$0{,}5\ O_2 + 2\ e^- + 2H_3O^+ ==> 3\ H_2O$$

Redoxgleichung:

$$H_2 + 0{,}5\ O_2 ==> H_2O$$

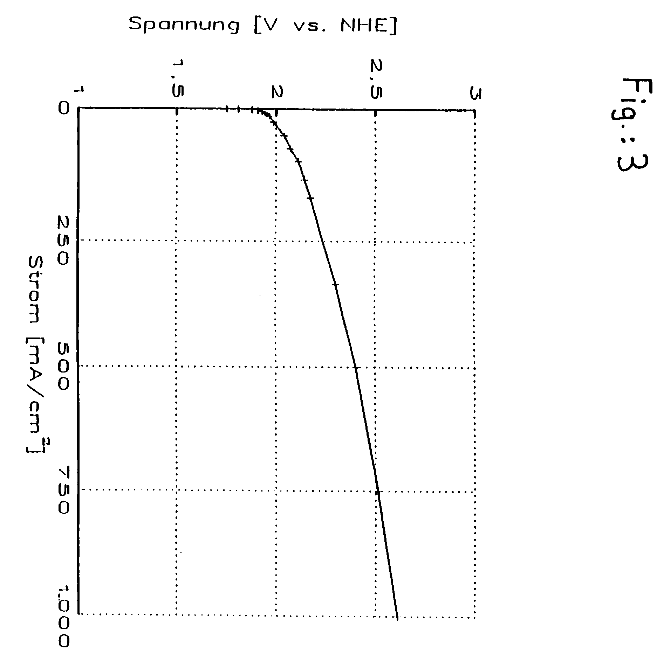

Figur 3 zeigt nun eine Strom-Spannungs-Charakteristik eines gemäß Beispiel 1 hergestellten Elektrodenmembranverbundes die bei 26 °C in der Wasserelektrolyse als polymerer Festelektrolyt eingesetzt wurde. Trotz der sehr geringen Membrandicke konnte eine voll funktionsfähige Membranelektrodeneinheit hergestellt werden. Die I-U-Werte der im Beispielsfall noch nicht einmal optimierten Membran/Elektroden-Einheit liegen bereits in sehr guten Bereichen.

**Patentansprüche**

**1.** Verfahren zur Herstellung eines Elektrodenmembranverbundes aus einem einen Kernbereich bildenden Ionenaustauschermaterial und daran beidseitig kontaktierten Elektroden, für Brennstoffzellen oder Elektrolyseure, dadurch gekennzeichnet, daß

a) ein aus in Lösungsmittel löslichem Homopolymer oder Copolymer oder einer Mischung davon gebildeter Kernbereich A hergestellt wird,
b) separat davon dünne Schichten aus einem Elektrodenmaterial hergestellt werden,
c) daß die Seiten des Kernbereichs A oder die Elektroden oder beide mit einem Lösemittel oder einer den Kernbereich anlösenden Polymerlösung benetzt werden und daß die so vorbehandelten Komponenten an ihren benetzten Flächen durch Zusammenpressen zusammengefügt werden.

**2.** Verfahren zur Herstellung eines Elektrodenmembranverbundes aus einem einen Kernbereich bildenden Ionenaustauschermaterial und daran beidseitig kontaktierten Elektroden, für Brennstoffzellen oder Elektrolyseure, dadurch gekennzeichnet, daß

a) eine dünne Schicht aus einem Elektrodenmaterial hergestellt wird,
b) daß durch ein geeignetes Auftragsverfahren eine Schicht aus in Lösungsmittel löslichen Homopolymeren oder Copolymeren oder Gemischen davon auf die Oberfläche der Elektrode aufgebracht wird, so daß eine Halbmembranelektrodeneinheit entsteht,
c) daß zwei dieser sogenannten Halbmembranelektrodeneinheiten durch Anlösen einer oder beider Halbmembranelektrodeneinheiten mit einem Lösemittel oder einer Polymerlösung zum Elektrodenmembranverbund verbunden werden.

**3.** Verfahren zur Herstellung eines Elektrodenmembranverbundes nach Anspruch 1 und 2, dadurch gekennzeichnet, daß zur Herstellung der dünnen Schicht aus dem Elektrodenmaterial Zusatz- bzw. Hilfsstoffe wie Treibmittel und/oder Hydrophobierungsmittel zugegeben werden.

**4.** Verfahren zur Herstellung eines Elektrodenmembranverbundes nach Anspruch 3, dadurch gekennzeichnet, daß

die Zusatz- bzw. Füllstoffe insbesondere das Treibmittel auf das fertige Elektrodenmaterial aufgebracht wird.

**5.** Verfahren zur Herstellung eines Elektrodenmembranverbundes nach Anspruch 3 und 4, dadurch gekennzeichnet, daß als Treibmittel feste Treibmittel die in der Polymerlösung nicht löslich sind verwendet werden.

**6.** Verfahren zur Herstellung eines Elektrodenmembranverbundes nach Anspruch 1 und 2, dadurch gekennzeichnet, daß nach der Herstellung der dünnen Schicht des Elektrodenmaterials die Elektrode auf einer Seite mit einer Lösung bzw. Emulsion des ionenleitenden Polymers beaufschlagt wird.

**7.** Verfahren zur Herstellung eines Elektrodenmembranverbundes nach Anspruch 6, dadurch gekennzeichnet, daß das ionenleitende Polymer zusätzlich gelöste Treibmittel enthält.

**8.** Verfahren zur Herstellung eines Elektrodenmembranverbundes nach Anspruch 7, dadurch gekennzeichnet, daß als Treibmittel physikalische oder chemische Treibmittel insbesondere Lösemittel mit Siedetemperaturen im Bereich von 20 bis 160 °C, thermisch initiierbare gasentwickelnde Verbindungen mit Zersetzungstemperaturen im Bereich von 20 bis 160 °C wie 4,4'-Oxy-bis(benzolsulfonylsemicarbazid) oder durch Strahlung initiierbare gasentwickelnde Verbindungen wie Azobis(isobutyronitril) verwendet werden.

**9.** Verfahren zur Herstellung eines Elektrodenmembranverbundes nach Anspruch 7 und 8, dadurch gekennzeichnet, daß die Beaufschlagung der dünnen Schicht des Elektrodenmaterials mittels Verfahren zum Aufbringen von dünnen Schichten wie Aufsprühen, Aufstreichen oder Tränken erfolgt.

**10.** Verfahren zur Herstellung eines Elektrodenmembranverbundes nach mindestens einem der Ansprüch 1 bis 9, dadurch gekennzeichnet, daß die Homopolymere ausgewählt sind aus der gruppe der folgenden Monomereinheiten
subst. Poly(diene):

$$[ - CH_2 - C(R_1) = CH - CH_2 - ]$$

$$[ - CH_2 - C(R_1)(CH = CH_2) - ]$$

$$[ - CH_2, CH(C(R_1) = CH_2) - ]$$

$R_1 =$ -H, $-CH_3$

subst. Poly(alkene):

$$[ -CH_2 - C(R_2)(R_3) -]$$

$R_2 =$ -H, $-CH_3$
$R_3 =$ -COOH, $-COO(R_4)$, $-CONH_2$, -CN, -OH, $-O(R_4)$, $-OC(O)(R_4)$, $-C(O)(R_4)$, -Cl, $-C_6H_4(R_5)$

$R_4 =$ $-CH_3$, $-C_2H_5$, $-C_3H_7$, $-C_4H_9$
$R_5 =$ -COOH, $-SO_3H$, $-PO_3H_2$

subst. Poly(phenylenoxide) und Poly(phenylensulfide):

$$[- X_1 - R_6 -]$$

$X_1 =$ -O-, -S-
$R_6 =$ $-C_6H_4-$, $-C_6H_3(R_5)-$, $-C_6H_2(CH_3)_2-$, $-C_6H(CH_3)_2(R_5)-$

$R_5 =$ -COOH, $-SO_3H$, $-PO_3H_2$

subst. Poly(ester):

$$[- O - C(O) - R_{14} - ], [ - O - C(O) - R_{14} - C(O) - O - R_{17}]$$

$R_{14}, R_{17}$ = $-C_6H_4-$, $-C_6H_3(R_5)-$, $-C_6H_2(CH_3)_2-$, $-C_6H(CH_3)_2(R_5)-$, $-CH_2-$, $-C_2H_4-$, $-C_3H_6-$, $-C_4H_8-$

$R_5$ = $-COOH$, $-SO_3H$, $-PO_3H_2$

subst. Poly(carbonate):

$$[- O - C(O) - O - R_{14} - C(CH_3)_2, R_{17} - ]$$

$R_{14}, R_{17}$ = $-C_6H_4-$, $-C_6H_3(R_5)-$, $-C_6H_2(CH_3)_2-$, $-C_6H(CH_3)_2(R_5)-$, $-CH_2-$, $-C_2H_4-$, $-C_3H_6-$, $-C_4H_8-$

$R_5$ = $-COOH$, $-SO_3H$, $-PO_3H_2$

subst. Poly(urethane):

$$[ - NH - C(O) - O - R_{14} - ]$$

$R_{14}$ = $-C_6H_4-$, $-C_6H_3(R_5)-$, $-C_6H_2(CH_3)_2-$, $-C_6H(CH_3)_2(R_5)-$, $-CH_2-$, $-C_2H_4-$, $-C_3H_6-$, $-C_4H_8-$

$R_5$ = $-COOH$, $-SO_3H$, $-PO_3H_2$

subst. Poly(amide):

$$[ - NH - C(O) - R_{14} - ], [- NH - C(O) - R_{14} - C(O) - NH - R_{17} - ]$$

$R_{14}, R_{17}$ = $-C_6H_4-$, $-C_6H_3(R_5)-$, $-C_6H_2(CH_3)_2-$, $-C_6H(CH_3)_2(R_5)-$, $-CH_2-$, $-C_2H_4-$, $-C_3H_6-$, $-C_4H_8-$

$R_5$ = $-COOH$, $-SO_3H$, $-PO_3H_2$

subst. Poly(harnstoffe):

$$[ - NH - C(O) - NH - R_{14} - ]$$

$R_{14}$ = $-C_6H_4-$, $-C_6H_3(R_5)-$, $-C_6H_2(CH_3)_2-$, $-C_6H(CH_3)_2(R_5)-$, $-CH_2-$, $-C_2H_4-$, $-C_3H_6-$, $-C_4H_8-$

$R_5$ = $-COOH$, $-SO_3H$, $-PO_3H_2$

subst. Poly(sulfone):

$$[ - S(O)_2 - R_7 - O - R_8 - C(CH_3)_2 - R_9 - O - R_{10} - ]$$

$R_7$, $R_8$, $R_9$, $R_{10}$ = $-C_6H_4-$, $-C_6H_3(R_5)-$, $-C_{10}H_6-$, $-C_{10}H_5(R_5)-$

$R_5$ = $-COOH$, $-SO_3H$, $-PO_3H_2$

subst. Poly(ethersulfone):

$$[ [ - S(O)_2 - R_7 - ]_n [- O- R_8 - ]_m ]$$

n, m = 1 oder 2
$R_7$, $R_8$ = $-C_6H_4-$, $-C_6H_3(R_5)-$, $-C_{10}H_6-$, $-C_{10}H_5(R_5)-$

$R_5$ = $-COOH$, $-SO_3H$, $-PO_3H_2$

subst. Poly(sulfonate):

$$[-O-S(O)-O-R_6-]$$

$R_6$ = $-C_6H_4-$, $-C_6H_3(R_5)-$, $-C_{10}H_6-$, $-C_{10}H_5(R_5)-$

$R_5$ = $-COOH$, $-SO_3H$, $-PO_3H_2$

subst. Poly(etherketone)

$$[[-C(O)-R_7-]_n[-O-R_8-]_m]$$

n, m = 1 oder 2
$R_7$, $R_8$ = $-C_6H_4-$, $-C_6H_3(R_5)-$, $-C_{10}H_6-$, $-C_{10}H_5(R_5)-$

subst. Poly(perfluoraliphaten)

$$[-CF_2-CF(R_{11})-]$$

$R_{11}$ = $-F$, $-C_6H_5$, $-C_6H_4(R_5)$, $-OC_6H_4(R_5)$

$R_5$ = $-COOH$, $-SO_3H$, $-PO_3H_2$

subst. Poly(benzoxazole):

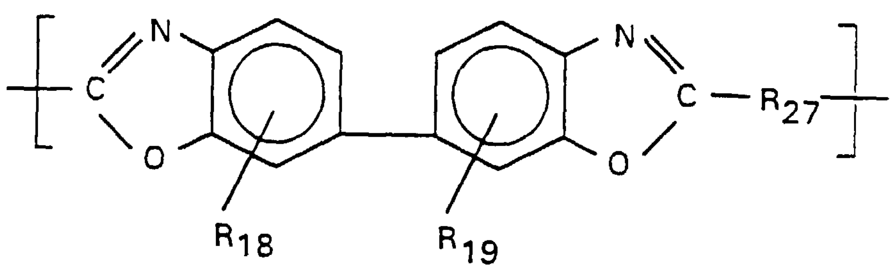

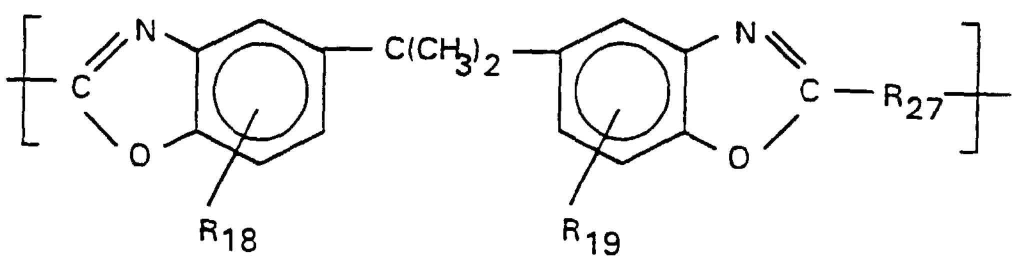

$R_{27}$ = $-C_6H_3(R_{20})-R-(CH_2)_p-$
$R_{18}$, $R_{19}$, $R_{20}$ = $-H$, $-COOH$, $-SO_3H$, $-PO_3H_2$
p = 2-8

subst. Poly(benzimidazole):

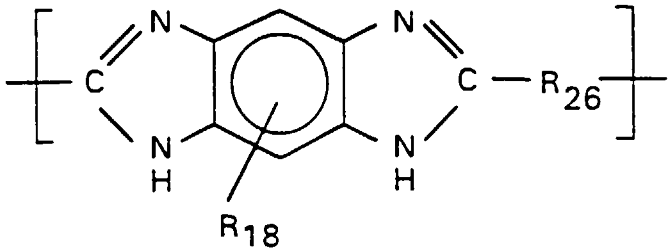

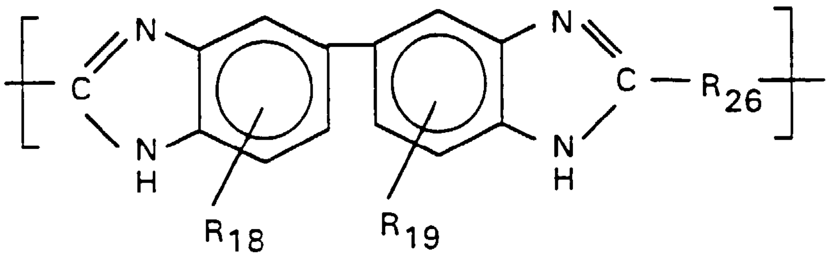

$R_{26}$ = $-C_6H_3(R_{20})-$, $-(CH_2)p-$
$R_{18}$, $R_{19}$, $R_{20}$ = -H, -COOH, $-SO_3H$, $-PO_3H_2$
p = 2-8

subst. Poly(dithiazole):

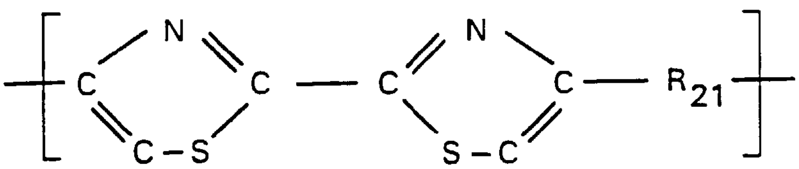

$R_{21}$ = $-C_6H_3(R_{20})-$, $-C_6H_3(R_{20})-(CH_2)_p-C_6H_3(R_{20})-$
$R_{20}$ = -H, -COOH, $-SO_3H$, $-PO_3H_2$
p = 2-8

subst. Poly(benzothiazole):

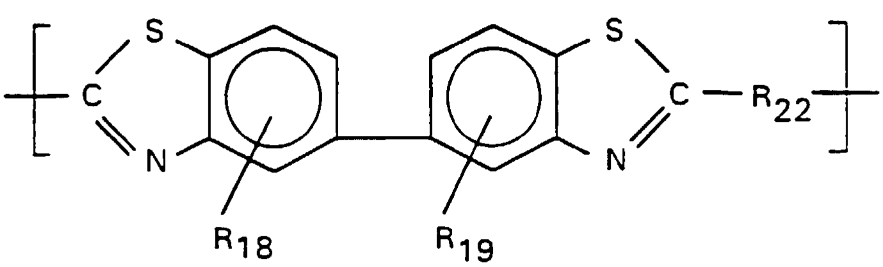

$R_{22}$ = $-C_6H_3(R_{20})-$, $-C_6H_3(R_{20})-O-C_6H_3(R_{20})-$, $-C_6H_3(R_{20})-C(O)-C_6H_3(R_{20})-$
$R_{18}$, $R_{19}$, $R_{20}$ = -H, -COOH, $-SO_3H$, $-PO_3H_2$

subst. Poly(Phenylchinoxaline)

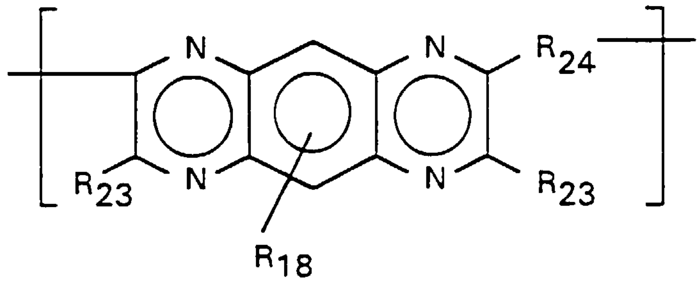

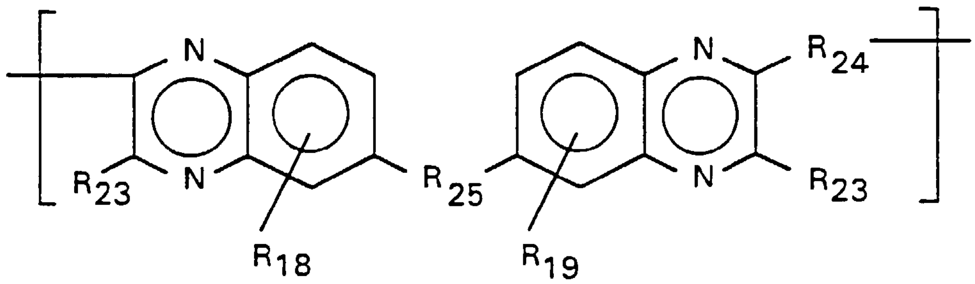

| | |
|---|---|
| $R_{23}$ = | $-H$, $-C_6H_4(R_{20})$ |
| $R_{24}$ = | $-C_6H_3(R_{20})-$, $-C_6H_3(R_{20})-R_{25}-C_6H_3(R_{20})-$, |
| $R_{25}$ | $-O-$, $-S-$, $-S(O)_2$, $-C(O)-$ |
| $R_{18}$, $R_{19}$, $R_{20}$ = | $-H$, $-COOH$, $-SO_3H$, $-PO_3H_2$ |

subst. Poly(phosphazene)

$$[ - P(R_{12})(R_{13}) = N - ]$$

$R_{12}$, $R_{13}$ = $-OCH_3$, $-OC_2H_5$, $-OC_3H_7$, $-OC_4H_9$, $-OC_6H_S$, $-OC_6H_4(R_5)$

$R_5$ = $-COOH$, $-SO_3H$, $-PO_3H_2$

subst. Poly(siloxane)

$$( - O - Si(OR_{15})(OR_{16}) - ]$$

$$[- O - Si(R_{15})(R_{16}) - ]$$

$R_{15}$, $R_{16}$ = $-CH_3$, $-C_2H_5$, $-C_3H_7$, $-C_4H_9$, $-C_6H_5$, $-C_6H_4(R_5)$

$R_5$ = $-COOH$, $-SO_3H$, $-PO_3H_2$

**11.** Verfahren zur Herstellung eines Elektrodenmembranverbundes nach mindestens einem der Ansprüch 1 bis 10, dadurch gekennzeichnet, daß die Copolymere durch Kombination von mindestens zwei Monomereinheiten nach Anspruch 10 gebildet werden.

**12.** Verfahren zur Herstellung eines Elektrodenmenbranverbundes nach Anspruch 1-11, dadurch gekennzeichnet, daß die Homopolymer- oder Copolymereinheiten oder die Gemische davon zusätzlich vernetzbar sind.

**13.** Verfahren zur Herstellung eines Elektrodenmembranverbundes nach Anspruch 1 bis 12, dadurch gekennzeichnet,

daß als Elektrodenmaterial ein Element bevorzugt aus Elementen der VIII Nebengruppe, Legierungen, Oxide, Mischoxide oder Mischungen davon ausgewählt ist.

## Claims

**1.** A method of producing an electrode membrane composite from an ion exchange material forming a core zone and electrodes on both sides in contact therewith, for fuel cells or electrolyzers, characterised in that

a) a core zone A formed from copolymer or homopolymer soluble in solvent or a mixture thereof is produced,
b) separately therefrom, thin layers of an electrode material are produced,
c) in that the sides of the core zone A or the electrodes, or both, are wetted with a solvent or a polymer solution softening the core zone, and in that the components thus pre-treated are joined at their wetted surfaces by being pressed together.

**2.** A method of producing an electrode membrane composite from an ion exchange material forming a core zone and electrodes on both sides in contact therewith, for fuel cells or electrolyzers, characterised in that

a) a thin layer of an electrode material is produced,
b) in that, by means of an appropriate application method, a layer of copolymers or homopolymers soluble in solvents or mixtures thereof is applied to the surface of the electrode, so that a half membrane electrode unit results,
c) in that two of these so-called half membrane electrode units are joined to the electrode membrane composite by softening one or both half membrane electrode units with a solvent or a polymer solution.

**3.** A method of producing an electrode membrane composite according to claim 1 or 2, characterised in that, in order to produce the thin layer from the electrode material, additives or auxiliary materials such as expanding agents and/or water-repellent agents are added.

**4.** A method of producing an electrode membrane composite according to claim 3, characterised in that the additives or fillers, in particular the expanding agent, is applied to the finished electrode material.

**5.** A method of producing an electrode membrane composite according to claim 3 or 4, characterised in that solid expanding agents which are not soluble in the polymer solution are used as expanding agents.

**6.** A method of producing an electrode membrane composite according to claim 1 or 2, characterised in that, after production of the thin layer of electrode material, the electrode is covered on one side with a solution or emulsion of the ion-conductive polymer.

**7.** A method of producing an electrode membrane composite according to claim 6, characterised in that the ion-conductive polymer additionally contains dissolved expanding agents.

**8.** A method of producing an electrode membrane composite according to claim 7, characterised in that there are used as expanding agents physical or chemical expanding agents, particularly solvents with boiling points in the range from 20 to 160°C, thermally-initiated, gas-developing compounds with decomposition temperatures in the range from 20 to 160°C such as 4,4'-oxy-bis (benzolsulphonylsemicarbazide) or gas-developing compounds initiated by radiation, such as azo-bis (isobutyronitrile).

**9.** A method of producing an electrode membrane composite according to claim 7 or 8, characterised in that coverage of the thin layer of electrode material is effected by means of processes for applying thin coatings, such as spraying, painting or impregnation.

**10.** A method of producing an electrode membrane composite according to at least one of claims 1 to 9, characterised in that the homopolymers are selected from the following monomer units:
subst. Poly(diene):

$$[ - CH_2 - C(R_1) = CH - CH_2 - ]$$

$$[ - CH_2 - C(R_1)(CH = CH_2) - ]$$

$$[ - CH_2 - CH(C(R_1) = CH_2) - ]$$

$R_1 =$ -H, $-CH_3$

subst. Poly(alkene):

$$[ - CH_2 - C(R_2)(R_3) - ]$$

$R_2 =$ -H, $-CH_3$
$R_3 =$ -COOH, $-COO(R_4)$, $-CONH_2$, -CN, -OH, $-O(R_4)$, $-OC(O)(R_4)$, $-C(O)(R_4)$, -Cl, $-C_6H_4(R_5)$

$R_4 =$ $-CH_3$, $-C_2H_5$, $-C_3H_7$, $-C_4H_9$
$R_5 =$ -COOH, $-SO_3H$, $-PO_3H_2$

subst. Poly(phenylenoxide) und Poly(phenylensulfide):

$$[ - X_1 - R_6 - ]$$

$X_1 =$ -O-, -S-
$R_6 =$ $-C_6H_4-$, $-C_6H_3(R_5)-$, $-C_6H_2(CH_3)_2-$, $-C_6H(CH_3)_2(R_5)-$

$R_5 =$ -COOH, $-SO_3H$, $-PO_3H_2$

subst. Poly(ester):

$$[ - O - C(O) - R_{14} - ], [ - O - C(O) - R_{14} - C(O) - O - R_{17}]$$

$R_{14}, R_{17} =$ $-C_6H_4-$, $-C_6H_3(R_5)-$, $-C_6H_2(CH_3)_2-$, $-C_6H(CH_3)_2(R_5)-$, $-CH_2-$, $-C_2H_4-$, $-C_3H_6-$, $-C_4H_8-$

$R_5 =$ -COOH, $-SO_3H$, $-PO_3H_2$

subst. Poly(carbonate):

$$[ - O - C(O) - O - R_{14} - C(CH_3)_2 - R_{17} - ]$$

$R_{14}, R_{17} =$ $-C_6H_4-$, $-C_6H_3(R_5)-$, $-C_6H_2(CH_3)_2-$, $-C_6H(CH_3)_2(R_5)-$, $-CH_2-$, $-C_2H_4-$, $-C_3H_6-$, $-C_4H_8-$

$R_5 =$ -COOH, $-SO_3H$, $-PO_3H_2$

subst. Poly(urethane):

$$[ - NH - C(O) - O - R_{14} - ]$$

$R_{14} =$ $-C_6H_4-$, $-C_6H_3(R_5)-$, $-C_6H_2(CH_3)_2-$, $-C_6H(CH_3)_2(R_5)-$, $-CH_2-$, $-C_2H_4-$, $-C_3H_6-$, $-C_4H_8-$

$R_5 =$ -COOH, $-SO_3H$, $-PO_3H_2$

subst. Poly(amide):

$$[ - NH - C(O) - R_{14} - ], [ - NH - C(O) - R_{14} - C(O) - NH - R_{17} - ]$$

$R_{14}, R_{17}$ = $-C_6H_4-$, $-C_6H_3(R_5)-$, $-C_6H_2(CH_3)_2-$, $-C_6H(CH_3)_2(R_5)-$, $-CH_2-$, $-C_2H_4-$, $-C_3H_6-$, $-C_4H_8-$

$R_5$ = $-COOH$, $-SO_3H$, $-PO_3H_2$

subst. Poly(harnstoffe):

$$[ - NH - C(O) - NH - R_{14} - ]$$

$R_{14}$ = $-C_6H_4-$, $-C_6H_3(R_5)$, $-C_6H_2(CH_3)_2-$, $-C_6H(CH_3)_2(R_5)-$, $-CH_2-$, $-C_2H_4-$, $-C_3H_6-$, $-C_4H_8-$

$R_5$ = $-COOH$, $-SO_3H$, $-PO_3H_2$

subst. Poly(sulfone):

$$[ - S(O)_2 - R_7 - O - R_8 - C(CH_3)_2 - R_9 - O - R_{10} - ]$$

$R_7$, $R_8$, $R_9$, $R_{10}$ = $-C_6H_4-$ $-C_6H_3(R_5)-$, $-C_{10}H_6-$, $-C_{10}H_5(R_5)-$

$R_5$ = $-COOH$, $-SO_3H$, $-PO_3H_2$

subst. Poly(ethersulfone):

$$[ [ - S(O)_2 - R_7 - ]_n [- O - R_8 - ]_m ]$$

n, m = 1 oder 2
$R_7$, $R_8$ = $-C_6H_4-$, $-C_6H_3(R_5)-$, $-C_{10}H_6-$, $-C_{10}H_5(R_5)-$

$R_5$ = $-COOH$, $-SO_3H$, $-PO_3H_2$

subst. Poly(sulfonate):

$$[ - O - S(O) - O - R_6 - ]$$

$R_6$ = $-C_6H_4-$, $-C_6H_3(R_5)-$, $-C_{10}H_6-$, $-C_{10}H_5(R_5)-$

$R_5$ = $-COOH$, $-SO_3H$, $-PO_3H_2$

subst. Po(y(etherketone)

$$[ [ - C(O) - R_7 - ]_n [ - O - R_8 - ]_m ]$$

n, m = 1 oder 2
$R_7$, $R_8$ = $-C_6H_4-$, $-C_6H_3(R_5)-$, $-C_{10}H_6-$, $-C_{10}H_5(R_5)-$

subst. Poly(perfluoraliphaten)

$$[ - CF_2 - CF(R_{11}) - ]$$

$R_{11}$ = $-F$, $-C_6H_5$, $-C_6H_4(R_5)$, $-OC_6H_4(R_5)$

$R_5$ = -COOH, $-SO_3H$, $-PO_3H_2$

subst. Poly(benzoxazole):

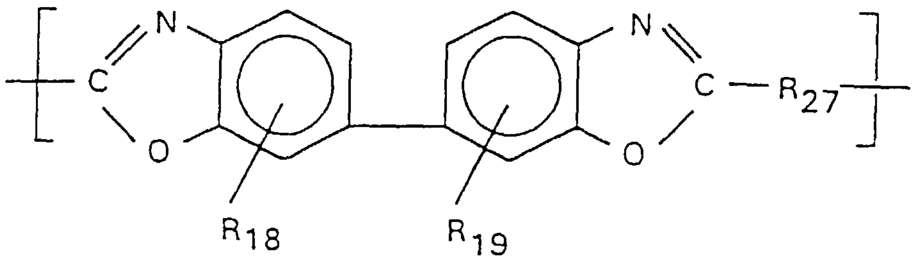

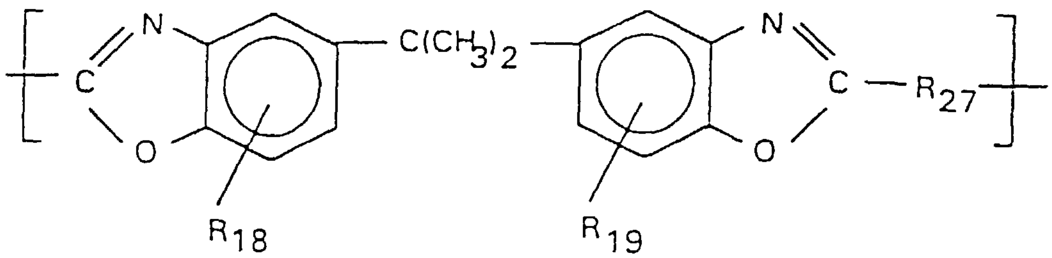

| | |
|---|---|
| $R_{27}$ = | $-C_6H_3(R_{20})-$, $-(CH_2)_p-$ |
| $R_{18}$, $R_{19}$, $R_{20}$ = | -H, -COOH, $-SO_3H$, $-PO_3H_2$ |
| p = | 2-8 |

subst. Poly(benzimidazole):

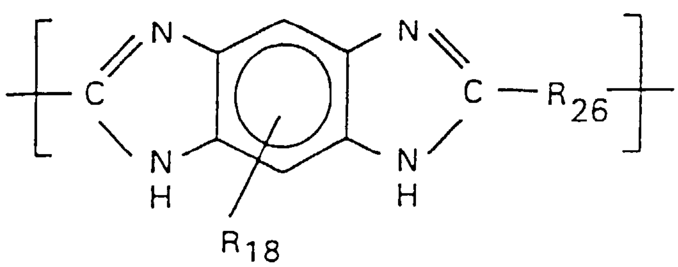

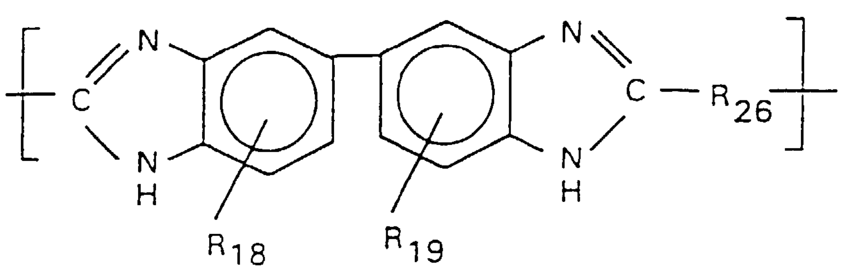

| | |
|---|---|
| $R_{26}$ = | $-C_6H_3(R_{20})-$, $-(CH_2)_p-$ |
| $R_{18}$, $R_{19}$, $R_{20}$ = | -H, -COOH, $-SO_3H$, $-PO_3H_2$ |
| p = | 2-8 |

subst. Poly(dithiazole):

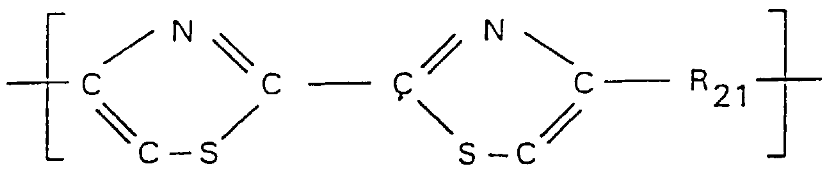

$R_{21}$ = $-C_6H_3(R_{20})-$, $-C_6H_3(R_{20})-(CH_2)_p-C_6H_3(R_{20})-$
$R_{20}$ = -H, -COOH, $-SO_3H$, $-PO_3H_2$
p = 2-8

subst. Poly(benzothiazole):

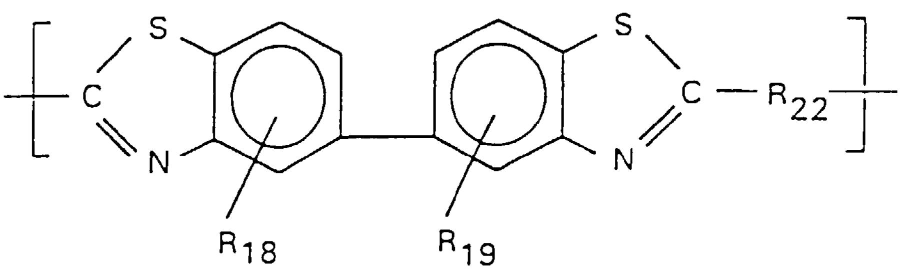

$R_{22}$ = $-C_6H_3(R_{20})-$, $-C_6H_3(R_{20})-O-C_6H_3(R_{20})-$, $-C_6H_3(R_{20})-C(O)-C_6H_3(R_{20})-$
$R_{18}$, $R_{19}$, $R_{20}$ = -H, -COOH, $-SO_3H$, $-PO_3H_2$

subst. Poly(phenylchinoxaline)

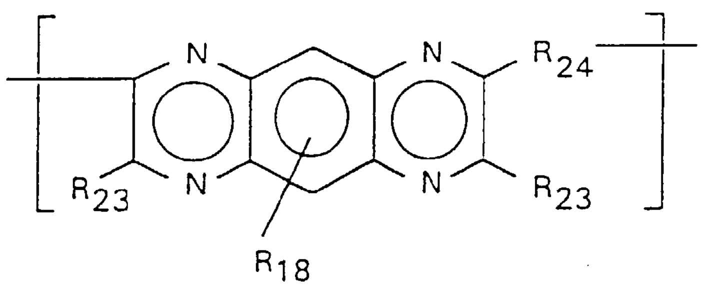

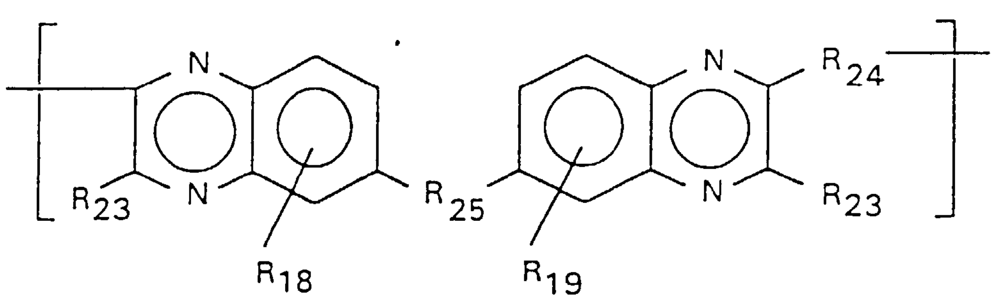

$R_{23}$ = -H, $-C_6H_4(R_{20})$
$R_{24}$ = $-C_6H_3(R_{20})-$, $-C_6H_3(R_{20})-R_{25}-C_6H_3(R_{20})-$,
$R_{25}$ -O-, -S-, $-S(O)_2$, -C(O)-
$R_{18}$, $R_{19}$, $R_{20}$ = -H, -COOH, $-SO_3H$, $-PO_3H_2$

subst. Poly(phosphazene)

$$[ - P(R_{12})(R_{13}) = N - ]$$

$R_{12}$, $R_{13}$ = $-OCH_3$, $-OC_2H_5$, $-OC_3H_7$, $-OC_4H_9$, $-OC_6H_5$, $-OC_6H_4(R_5)$

$R_5$ = $-COOH$, $-SO_3H$, $-PO_3H_2$

subst. Poly(siloxane)

$$[ - O - Si(OR_{15})(OR_{16}) - ]$$

$$[ - O - Si(R_{15})(R_{16}) -]$$

$R_{15}$, $R_{16}$ = $-CH_3$,$-C_2H_5$, $-C_3H_7$, $-C_4H_9$, $-C_6H_5$, $-C_6H_4(R_5)$

$R_5$ = $-COOH$, $-SO_3H$, $-PO_3H_2$

**11.** A method of producing an electrode membrane composite according to at least one of claims 1 to 10, characterized in that the copolymers are formed by combination of at least two monomer units according to claim 10.

**12.** A method of producing an electrode membrane composite according to claims 1 to 11, characterized in that the homopolymer or copolymer units or mixtures thereof are additionally cross-linkable.

**13.** A method of producing an electrode membrane composite according to claims 1 to 12, characterized in that an element preferably from the elements of the VIII subgroup, alloys, oxides, mixed oxides or mixtures thereof is selected as electrode material.

### Revendications

**1.** Procédé de préparation d'un assemblage de membrane d'électrode ou un matériau échangeur d'ions formant une zone noyau et en des électrodes en contact des deux côtés avec lui, destiné à des cellules électrochimiques ou des électrolyseurs,
caractérisé en ce que

a) on prépare une zone noyau A formée d'homopolymère ou de copolymère soluble dans un solvant ou d'un mélange de ceux-ci,
b) on prépare séparément de cela des couches minces en un matériau d'électrodes,
c) on mouille les côtés de la zone noyau A ou les électrodes ou les deux avec un solvant ou une solution polymère corrodant la zone noyau et on assemble les composants prétraités sur leurs surfaces mouillées par compression.

**2.** Procédé de préparation d'un assemblage de membrane d'électrode en un matériau échangeur d'ions formant une zone noyau et en des électrodes en contact des deux côtés avec lui, destiné à des cellules électrochimiques ou des électrolyseurs,
caractérisé en ce que

a) on prépare une couche mince en matériau d'électrode,
b) on applique par un procédé d'apport approprié une couche d'homopolymères ou de copolymères solubles dans des solvants ou de leurs mélanges, sur la surface de l'électrode, de façon à créer un ensemble demie-membrane et électrodes,
c) on assemble dans l'assemblage de membrane d'électrode deux de ces ensembles demi-membrane et électrodes par corrosion d'un ou des deux ensembles demie-membrane électrodes avec un solvant ou une solution polymère.

3. Procédé de préparation d'un assemblage de membrane d'électrode selon les revendications 1 et 2, caractérisé en ce que pour la préparation de la couche mince en un matériau d'électrode, on ajoute des matières d'addition ou des adjuvants comme des agents propulseurs et/ou des agents d'imperméabilisation.

4. Procédé de préparation d'un assemblage de membrane d'électrode selon la revendication 3, caractérisé en ce que les matières d'addition ou les charges en particulier l'agent propulseur sont appliquées sur le matériau d'électrode fini.

5. Procédé de préparation d'un assemblage de membrane d'électrode selon les revendications 3 et 4, caractérisé en ce que on utilise comme agent propulseur des agents solides qui ne sont pas solubles dans la solution polymère.

6. Procédé de préparation d'un assemblage de membrane d'électrode selon les revendications 1 et 2, caractérisé en ce que après la production de la couche mince du matériau d'électrode, l'électrode est chargée sur un côté avec une solution ou émulsion du polymère conducteur d'ions.

7. Procédé de préparation d'un assemblage de membrane d'électrode selon la revendication 6, caractérisé en ce que le polymère conducteur d'ions contient en plus des agents propulseurs dissous.

8. Procédé de préparation d'un assemblage de membrane d'électrode selon la revendication 7, caractérisé en ce que on utilise comme agent propulseur des agents propulseurs physiques ou chimiques notamment des solvants ayant des températures d'ébullition dans la gamme de 20 à 160°C, des composés dégageant du gaz activables thermiquement ayant des températures de décomposition dans la gamme de 20 à 160°C comme du 4,4'-oxy-bis(benzènsulfonylsemicarbazide) ou des composés dégageant du gaz activables par radiation comme de l'azo-bis-(isobutyronitrile).

9. Procédé de préparation d'un assemblage de membrane d'électrode selon les revendications 7 et 8, caractérisé en ce que la charge de la couche mince du matériau d'électrode a lieu au moyen de procédés pour appliquer des couches minces comme la pulvérisation, l'enduction ou l'imprégnation.

10. Procédé de préparation d'un assemblage de membrane d'électrode selon les revendications 1 à 9, caractérisé en ce que les homopolymères sont choisis dans le groupe des unités monomères suivantes :
Poly(diènes) substituées

$$[ - CH_2 - C(R_1) = CH - CH_2 - ]$$

$$[ - CH_2 - C(R_1)(CH = CH_2) - ]$$

$$[ - CH_2 - CH(C(R_1) = CH_2) - ]$$

$R_1 =$ -H, $-CH_3$

Poly(alcènes) subst.

$$[ - CH_2 - C(R_2)(R_3) - ]$$

$R_2 =$ -H, $-CH_3$

$R_3$ = -COOH, -COO($R_4$), -CONH$_2$, -CN, -OH, -O($R_4$), -OC(O)($R_4$), -C(O)($R_4$), -Cl, -$C_6H_4$($R_5$)

$R_4$ = -$CH_3$, -$C_2H_5$, -$C_3H_7$, -$C_4H_9$
$R_5$ = -COOH, -$SO_3H$, -$PO_3H_2$

Poly(oxydes de phénylène) et poly(sulfures de phénylène) subst.

$$[ - X_1 - R_6 - ]$$

$X_1$ = -O-, -S-
$R_6$ = -$C_6H_4$-, -$C_6H_3$($R_5$)-, -$C_6H_2(CH_3)_2$-, -$C_6H(CH_3)_2$($R_5$)-

$R_5$ = -COOH, -$SO_3H$, -$PO_3H_2$

Poly(esters) subst.

$$[ - O - C(O) - R_{14} - ], [ - O - C(O) - R_{14} - C(O) - O - R_{17}]$$

$R_{14}$,$R_{17}$ = -$C_6H_4$-, -$C_6H_3$($R_5$)-, -$C_6H_2(CH_3)_2$-, -$C_6H(CH_3)_2$($R_5$)-, -$CH_2$-, -$C_2H_4$-, -$C_3H_6$-, -$C_4H_8$-

$R_5$ = -COOH, -$SO_3H$, -$PO_3H_2$

Poly(carbonates) subst.

$$[ - O - C(O) - O - R_{14} - C(CH_3)_2 - R_{17} - ]$$

$R_{14}$,$R_{17}$ = -$C_6H_4$-, -$C_6H_3$($R_5$)-, -$C_6H_2(CH_3)_2$-, -$C_6H(CH_3)_2$($R_5$)-, -$CH_2$-, -$C_2H_4$-, -$C_3H_6$-, -$C_4H_8$-

$R_5$ = -COOH, -$SO_3H$, -$PO_3H_2$

Poly(uréthannes) subst.

$$[ - NH - C(O) - O - R_{14} - ]$$

$R_{14}$ = -$C_6H_4$-, -$C_6H_3$($R_5$)-, -$C_6H_2(CH_3)_2$-, -$C_6H(CH_3)_2$($R_5$)-, -$CH_2$-, -$C_2H_4$-, -$C_3H_6$-, -$C_4H_8$-

$R_5$ = -COOH, -$SO_3H$, -$PO_3H_2$

Poly(amides) subst.

$$[ - NH - C(O) - R_{14} - ], [ - NH - C(O) - R_{14} - C(O) - NH - R_{17} - ]$$

$R_{14}$,$R_{17}$ = -$C_6H_4$-, -$C_6H_3$($R_5$)-, -$C_6H_2(CH_3)_2$-, -$C_6H(CH_3)_2$($R_5$)-, -$CH_2$-, -$C_2H_4$-, -$C_3H_6$-, -$C_4H_8$-

$R_5$ = -COOH, -$SO_3H$, -$PO_3H_2$

Poly(urées) subst.

$$[ - NH - C(O) - NH - R_{14} - ]$$

$R_{14}$ = -$C_6H_4$-, -$C_6H_3$($R_5$)-, -$C_6H_2(CH_3)_2$-, -$C_6H(CH_3)_2$($R_5$)-, -$CH_2$- -$C_2H_4$- -$C_3F_6$-, -$C_4H_8$-

$R_5 =$ -COOH, $-SO_3H$, $-PO_3H_2$

Poly(sulfones) subst.

$$[ - S(O)_2 - R_7 - O - R_8 - C(CH_3)_2 - R_9 - O - R_{10} - ]$$

$R_7, R_8, R_9, R_{10} =$ $-C_6H_4-$, $-C_6H_3(R_5)-$, $-C_{10}H_6-$, $-C_{10}H_5(R_5)-$

$R_5 =$ -COOH, $-SO_3H$, $-PO_3H_2$

Poly(éthersulfones) subst.

$$[ [ - S(O)_2 - R_7 - ]_n [- O - R_8 - ]_m ]$$

n, m = 1 ou 2
$R_7, R_8 =$ $-C_6H_4-$, $-C_6H_3(R_5)-$, $-C_{10}H_6-$, $-C_{10}H_5(R_5)-$

$R_5 =$ -COOH, $-SO_3H$, $-PO_3H_2$

Poly(sulfonates) subst.

$$[ - O - S(O) - O - R_6 - ]$$

$R_6 =$ $-C_6H_4-$, $-C_6H_3(R_5)-$, $-C_{10}H_6-$, $-C_{10}H_5(R_5)-$

$R_5 =$ -COOH, $-SO_3H$, $-PO_3H_2$

Poly(éthercétones) subst.

$$[ [- C(O) - R_7 -]_n [- O - R_8 -]_m ]$$

n, m = 1 ou 2
$R_7, R_8 =$ $-C_6H_4-$, $-C_6H_3(R_5)-$, $-C_{10}H_6-$, $-C_{10}H_5(R_5)-$

Poly(perfluoraliphates) subst.

$$[ - CF_2 - CF(R_{11}) - ]$$

$R_{11} =$ -F,$-C_6H_5$, $-C_6H_4(R_5)$, $-OC_6H_4(R_5)$

$R_5 =$ -COOH, $-SO_3H$, $-PO_3H_2$

Poly(benzoxazoles) subst.

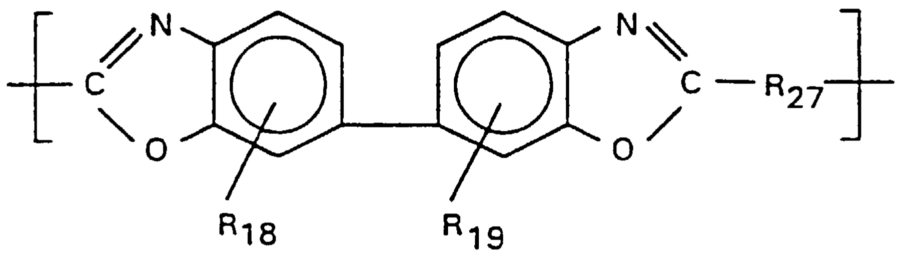

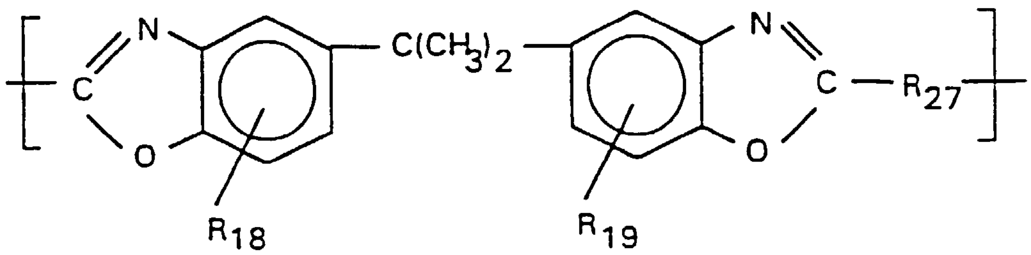

| | |
|---|---|
| $R_{27}$ = | $-C_6H_3(R_{20})-$, $-(CH_2)_p-$ |
| $R_{18}$, $R_{19}$, $R_{20}$ = | -H, -COOH, $-SO_3H$, $-PO_3H_2$ |
| p = | 2-8 |

Poly(benzimidazoles) subst.

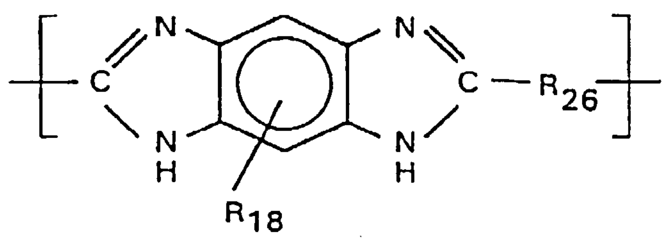

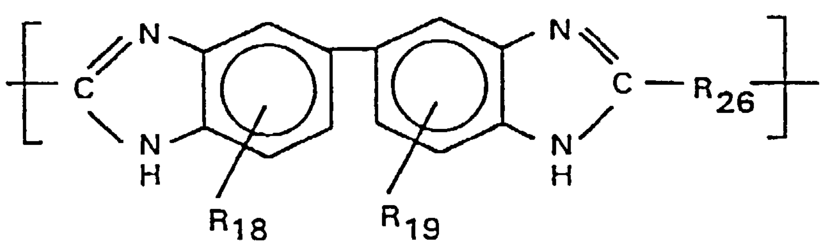

| | |
|---|---|
| $R_{26}$ = | $-C_6H_3(R_{20})-$, $-(CH_2)_p-$ |
| $R_{18}$, $R_{19}$, $R_{20}$ = | -H, -COOH, $-SO_3H$, $-PO_3H_2$ |
| p = | 2-8 |

Poly(dithiazoles) subst.

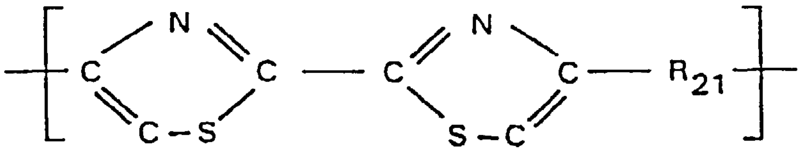

$R_{21}$ = $-C_6H_3(R_{20})-$, $-C_6H_3(R_{20})-(CH_2)_p-C_6H_3(R_{20})-$
$R_{20}$ = -H, -COOH, $-SO_3H$, $-PO_3H_2$
p = 2-8

Poly(benzothiazoles) subst.

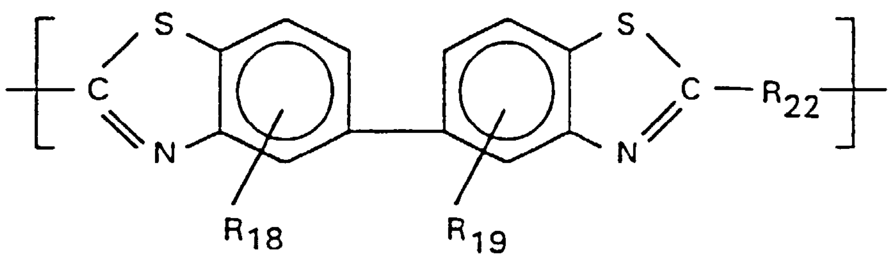

$R_{22}$ = $-C_6H_3(R_{20})-$, $-C_6H_3(R_{20})-O-C_6H_3(R_{20})-$, $-C_6H_3(R_{20})-C(O)-C_6H_3(R_{20})-$
$R_{18}$, $R_{19}$, $R_{20}$ = -H, -COOH, $-SO_3H$, $-PO_3H_2$

Poly(phénylchinoxalines) subst.

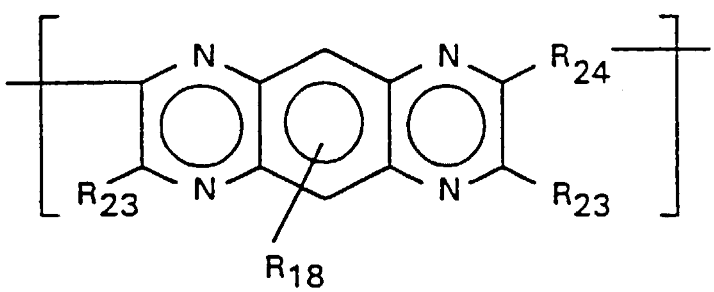

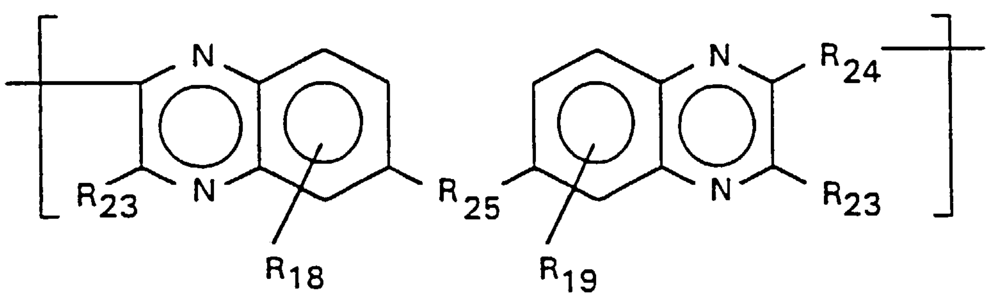

$R_{23}$ = -H,$-C_6H_4(R_{20})$
$R_{24}$ = $-C_6H_3(R_{20})-$, $-C_6H_3(R_{20})-R_{25}-C_6H_3(R_{20})-$,
$R_{25}$ -O-, -S-, $-S(O)_2$, -C(O)-
$R_{18}$, $R_{19}$, $R_{20}$ = -H, -COOH, $-SO_3H$, $-PO_3H_2$

Poly(phosphazènes) subst.

$$[ - P(R_{12})(R_{13}) = N - ]$$

$R_{12}$, $R_{13}$ = $-OCH_3$, $-OC_2H_5$, $-OC_3H_7$, $-OC_4H_9$, $-OC_6H_5$, $-OC_6H_4(R_5)$

$R_5$ = $-COOH$, $-SO_3H$, $-PO_3H_2$

Poly(siloxanes) subst.

$$[ - O - Si(OR_{15})(OR_{16}) - ]$$

$$[ - O - Si(R_{15})(R_{16}) - ]$$

$R_{15}$, $R_{16}$ = $-CH_3$, $-C_2H_5$, $-C_3H_7$, $-C_4H_9$, $-C_6H_5$, $-C_6H_4(R_5)$

$R_5$ = $-COOH$, $-SO_3H$, $-PO_3H_2$

**11.** Procédé de préparation d'un assemblage de membrane d'électrode selon les revendications 1 à 10, caractérisé en ce que les copolymères sont formés par combinaison d'au moins deux unités polymères selon la revendication 10.

**12.** Procédé de préparation d'un assemblage de membrane d'électrode selon les revendications 1 à 11, caractérisé en ce que les unités homopolymères ou copolymères ou leurs mélanges sont en plus réticulables.

**13.** Procédé de préparation d'un assemblage de membrane d'électrode selon les revendications 1 à 12, caractérisé en ce que comme matériau d'électrode on choisit de préférence un élément provenant des éléments du VIII$^{ème}$ sous groupe, des alliages, des oxydes, des oxydes mixtes ou des mélanges de ceux-ci.

Fig.:1

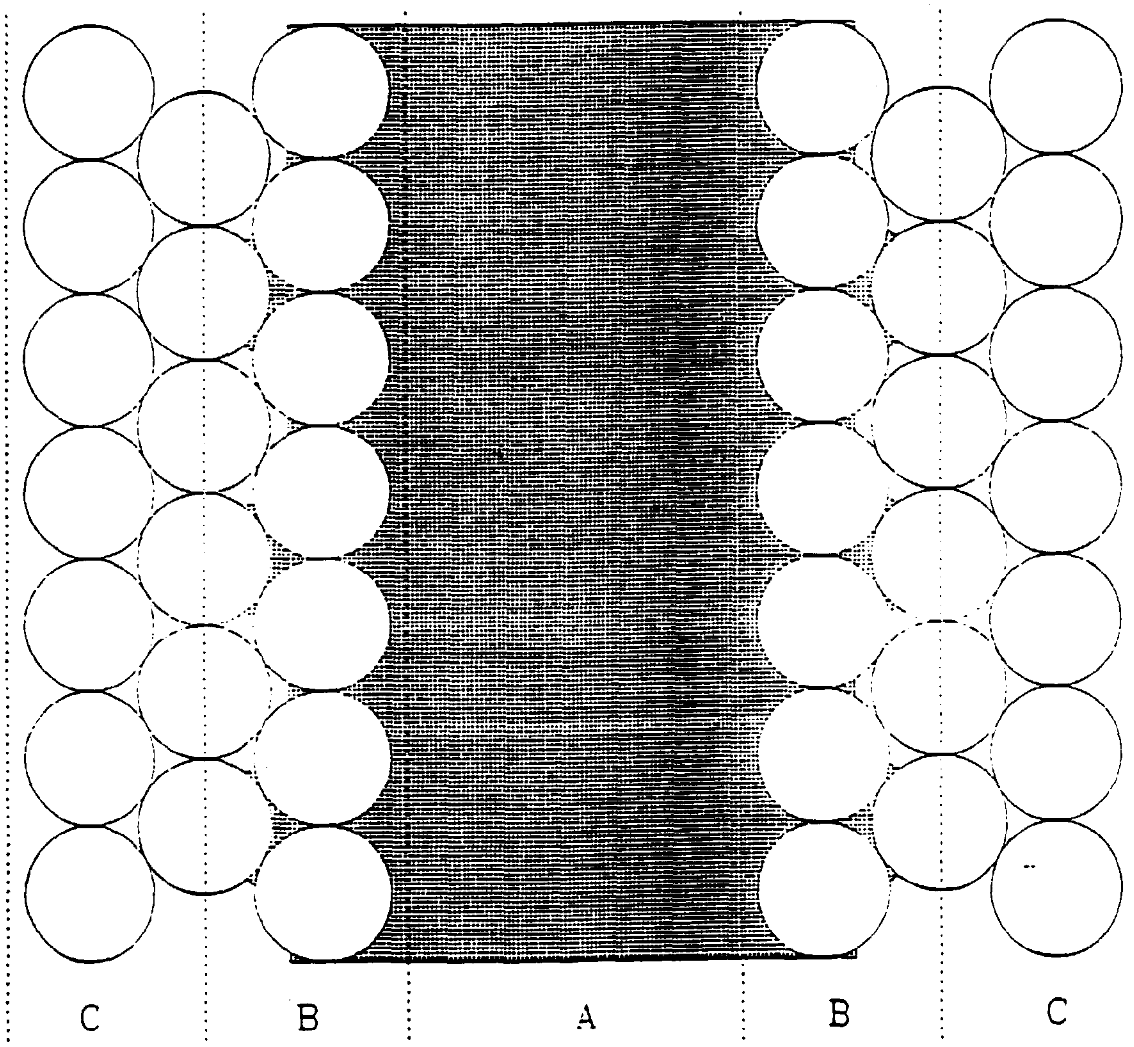

Fig.: 2

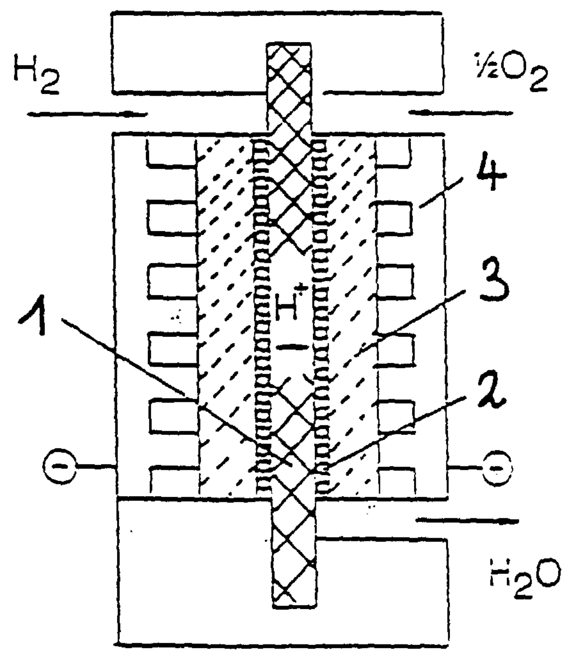

Fig.: 3